# FASCICULE DE BREVET EUROPEEN

(11) **EP 1 121 328 B1**
(45) Date de publication et mention de la délivrance du brevet: **17.04.2002**
(21) Numéro de dépôt: 99970075.0
(22) Date de dépôt: 01.10.1999
(51) Int. Cl.: C01F 7/06, B01D 3/06, B01D 1/12

(54) **PERFECTIONNEMENT AU PROCEDE ET A LA CHAINE D'ATTAQUE DE MINERAI DE BAUXITE SELON LE PROCEDE BAYER**
VERBESSERUNG DES AUFSCHLUSSES VON BAUXIT NACH DEM BAYER VERFAHREN
IMPROVEMENT TO THE BAYER PROCESS AND TO THE ATTACK CHAIN OF BAUXITE ORE

(30) Priorité: 01.10.1998 FR 9812510
(43) Date de publication de la demande: 08.08.2001
(73) Titulaire: Gea Kestner S.A.S., Montigny-le-Bretonneux, 78185 Saint Quentin en Yvelines (FR)
(72) Inventeur: DROY, Bernard, Jean, F-59700 Marcq en Baroeul (FR); MICHAUX, Dany, F-62270 Frevent (FR)
(74) Mandataire: Tilloy, Anne-Marie
(86) Numéro de dépôt international: FR9902335
(87) Numéro de publication internationale: WO0020334

(56) Documents cités:
- EP-A- 0 335 707
- WO-A-97/04849
- AU-B- 554 379
- DROY B: "EVAPORATION TECHNIQUES IN THE ALUMINA INDUSTRY" LIGHT METALS 1994, PROCEEDINGS OF THE TECHNICAL SESSIONS PRESENTED BY THE TMS LIGHT METALS COMMITTEE AT THE 123RD. TMS ANNUAL MEETING, SAN FRANCISCO, FEB. 27 - MAR. 3, 1994, no. MEETING 123, 27 février 1994 (1994-02-27), pages 139-145, XP000625564 MANNWEILER U (ED )

## Description

L'invention concerne un perfectionnement au procédé d'attaque continue de la bauxite selon le procédé Bayer qui permet le réglage synchronisé et optimisé de la température et de la concentration en soude active du milieu aqueux destiné à l'attaque (encore appelée liqueur d'attaque).

L'invention concerne aussi un perfectionnement à la chaîne d'attaque du procédé BAYER qui intervient dans le recyclage de la solution aqueuse caustique appauvrie (dite liqueur décomposée) issue de la précipitation du trihydroxyde d'aluminium, pour la réchauffer et la concentrer à une teneur en soude active conforme aux objectifs assignés par l'exploitant pour l'attaque de la bauxite, dans les digesteurs du procédé Bayer.

Tout au long de la description, on entend par :
- milieu aqueux destiné à l'attaque aussi bien la liqueur décomposée recueillie après la précipitation de Al(OH)₃ que l'on recycle après l'avoir réchauffée et concentrée en soude active pour former la liqueur d'attaque du minerai que la bouillie formée par le mélange de cette liqueur d'attaque et de la bauxite broyée ;
- milieu aqueux provenant de l'attaque, la liqueur riche en aluminate résultant de l'attaque de la bauxite, accompagnée ou non des matières stériles inattaquées à éliminer, encore appelée liqueur enceinte.

### ETAT DE LA TECHNIQUE

Le procédé Bayer constitue la principale technique de production d'alumine par l'attaque alcaline de la bauxite. Selon ce procédé qui est continu, on réalise l'attaque du minerai de bauxite par laquelle on provoque, sous pression, la solubilisation de l'alumine à une température adéquate, en général au moins égale à 140°C (selon que l'attaque s'effectue à basse ou à haute température, le niveau de température dépendant de la qualité de la bauxite traitée (bayerite ou hydrargillite ou gibbsite, et diaspore ou boehmite). Cette attaque est conduite au moyen d'une solution aqueuse de soude caustique (appelée liqueur d'attaque) ayant une concentration appropriée en soude active (exprimée par la suite en g/l de Na₂O actif). Au terme de l'attaque, on obtient un milieu aqueux formé d'une solution saturée d'aluminate de sodium, (appelée liqueur enceinte), et de résidus stériles d'impuretés à éliminer. On refroidit progressivement ce milieu résultant de l'attaque par une évaporation du type à détente étagée, puis on sépare la liqueur enceinte de la phase d'impuretés que l'on élimine.

Cette phase d'impuretés constitue le résidu non attaqué du minerai (appelé boues rouges), contenant principalement divers oxydes et sels métalliques de fer, de silice et de titane.

Quant à la liqueur enceinte, elle est refroidie jusqu'à la température souhaitée et ensemencée au moyen de cristaux de trihydroxyde d'aluminium pour provoquer, à partir de l'aluminate de sodium, la précipitation du trihydroxyde d'aluminium Al(OH)₃. Après une séparation liquide/solide, le trihydroxyde d'aluminium séparé est soumis à une calcination pour donner l'alumine Al₂O₃ et la liqueur appauvrie en aluminate de sodium (appelée liqueur décomposée) est renvoyée à l'attaque pour y être mise en oeuvre après avoir été portée à la température et à la concentration en soude active adéquates.

Dans le procédé BAYER tel qu'il se pratique aujourd'hui, subsistent encore des problèmes importants qui concernent à la fois :
- la quantité d'énergie calorifique nécessaire pour porter la liqueur d'attaque au niveau de température assignée par l'exploitant du procédé
- la reconcentration en soude active de la liqueur décomposée (au niveau optimal pour l'attaque, en adéquation avec la température assignée) par évaporation d'une quantité d'eau assurant l'équilibre du procédé.

Pour ce qui concerne la quantité d'énergie calorifique nécessaire pour porter la liqueur d'attaque de la bauxite au niveau de température qui lui est assigné, le réchauffage de la liqueur décomposée s'effectue en grande partie grâce à l'énergie calorifique cédée par la récupération de la chaleur sensible de la liqueur enceinte refroidie dans un système d'évaporation à détente étagée du milieu provenant de l'attaque. Mais cette énergie de récupération confère à la liqueur décomposée un certain niveau de température qui est insuffisant et qu'il faut augmenter par la mise en oeuvre de vapeur vive dans une série de réchauffeurs tubulaires.

Pour illustrer ce phénomène, dans le cas, par exemple, d'une attaque à 141°C, la liqueur décomposée, qui est réchauffée et concentrée par évaporation, dans la zone de réchauffage (alimentée en énergie calorifique par l'évaporation à détente étagée du milieu provenant de l'attaque), y entre à une température se situant entre 80°C et 90°C et en ressort à une température d'environ 120°C.

Cette liqueur décomposée étant encore insuffisamment réchauffée doit alors être (par exemple) portée à environ 156°C pour que le milieu d'attaque formé par le mélange de ladite liqueur et de la bauxite (réchauffée à environ 90°C) soit à la température souhaitée de 141°C : ce réchauffage de 120°C à 156°C se fait par utilisation de vapeur vive dans des échangeurs thermiques tubulaires.

Quant à la reconcentration par évaporation d'eau de la liqueur décomposée, elle s'impose par le fait que cette liqueur recyclée à l'attaque :
- a été diluée par des entrées d'eau dans le cycle, par exemple pour les opérations de lavage des stériles et du précipité de Al(OH)₃ ;
- doit avoir une teneur en soude active (exprimée en g/l de Na₂O actif) optimale pour l'attaque du minerai à la température choisie ;
- doit être reconcentrée de telle sorte que la quantité d'eau présente dans le cycle Bayer d'attaque de la bauxite soit maintenue le mieux possible constante.

C'est pourquoi, l'excédent d'eau ainsi créé doit être éliminé et cette élimination s'effectue par évaporation dans au moins une zone d'évaporation à détente étagée, associée à une zone d'échangeurs thermiques tubulaires chauffés par de la vapeur de détente et, en complément, par de la vapeur vive.

Ainsi, pour réchauffer et concentrer par évaporation la liqueur décomposée, il existe, dans le cycle de digestion des unités de production d'alumine (que l'attaque se fasse à basse ou haute température) une zone d'évaporation à détente étagée qui permet de récupérer l'énergie calorifique du milieu provenant de l'attaque pour la transférer au milieu destiné à l'attaque (liqueur décomposée) dans une zone de réchauffage étagée à échangeurs tubulaires dont l'ultime étage est chauffé par de la vapeur vive.

Mais, en plus de la zone d'évaporation à détente précédemment évoquée, il existe également, dans de nombreuses unités de production d'alumine selon le procédé BAYER, une section (spécifique) d'évaporation de la liqueur décomposée du type à détente étagée (quand la concentration de soude active est faible) ou du type à multiple effet (dans les autres cas) qui complète l'action de ladite zone d'évaporation à détente étagée, cette section spécifique d'évaporation étant alimentée en vapeur vive et traitant la liqueur décomposée (qui est à une température de l'ordre de 80 C-90°C), résultant de la précipitation de Al(OH)₃.

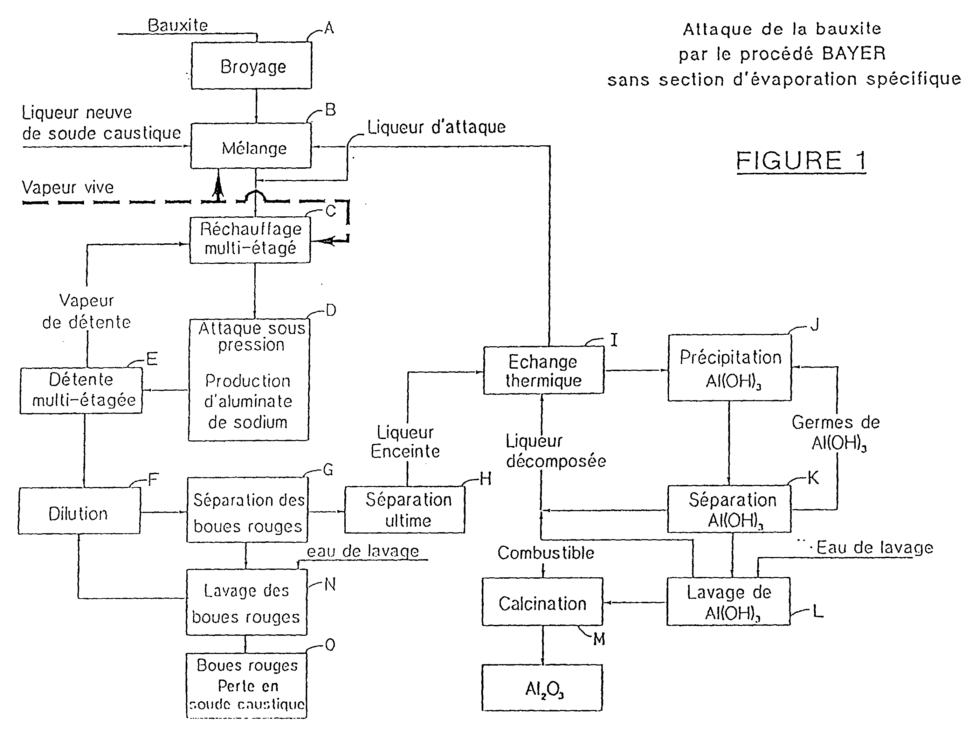

Plus précisément, le procédé Bayer, illustré par les schémas des figures 1, 2 et 3, se résume à une succession d'étapes essentielles qui, à quelques nuances près, se retrouvent dans toutes les unités de production d'alumine fonctionnant selon ce procédé.

Dans la suite de l'exposé de l'état de la technique, le réchauffage et la reconcentration en soude active de la liqueur décomposée concerneront indistinctement aussi bien ladite liqueur seule que la bouillie formée de la bauxite à attaquer et de ladite liqueur.

Selon la figurel (qui ne comporte pas une section spécifique d'évaporation), la bauxite destinée à l'attaque est broyée en (A) à la dimension adéquate (en présence éventuellement d'une fraction de la liqueur d'attaque), puis la bauxite broyée est mélangée en (B) avec la liqueur d'attaque en formant une bouillie qui est chauffée par chauffage indirect au moyen de vapeur vive.

La bouillie ainsi formée est ensuite graduellement chauffée à la température adéquate pour l'attaque de la bauxite dans la zone de réchauffage étagée (C) (constituée de réchauffeurs tubulaires) utilisant la vapeur de détente provenant de la zone de détente étagée (E), et dans un stade ultime de la vapeur vive.

Cette bouillie est alors introduite dans la zone d'attaque (D) où elle est maintenue à la température fixée pour l'attaque sous pression : cette attaque conduit à la production d'un milieu aqueux formé de la liqueur enceinte et des impuretés inattaquées.

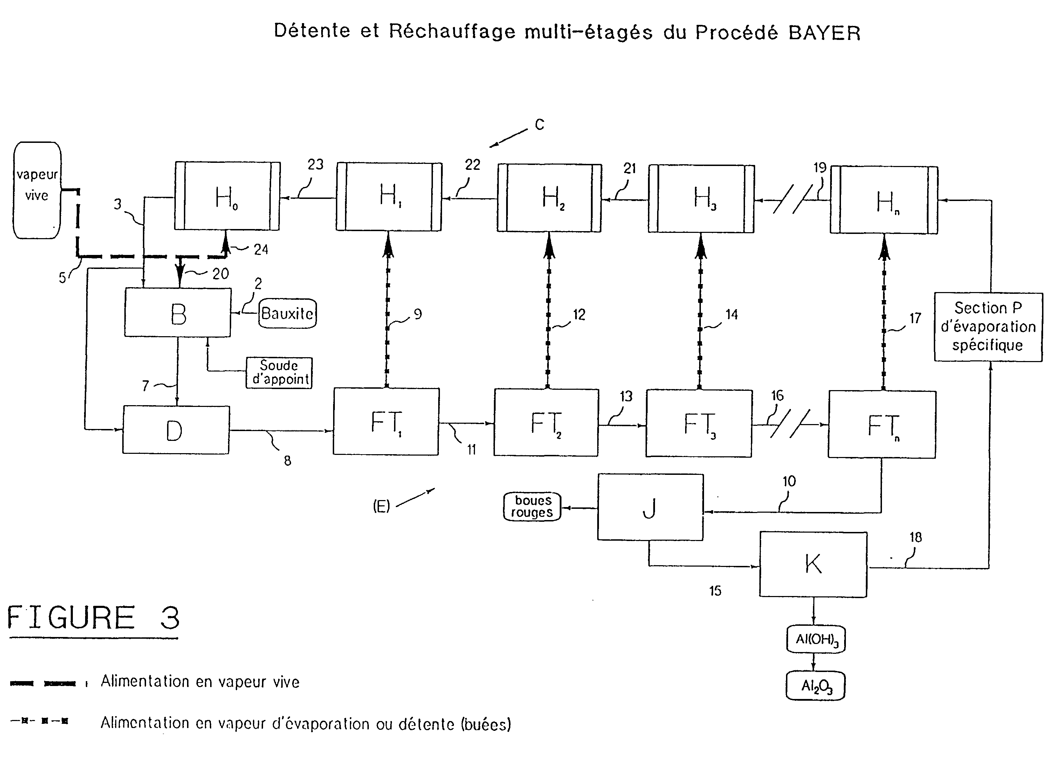

A la sortie de l'attaque (D), la bouillie contenant la liqueur enceinte, (qui est à température et pression élevées), est détendue dans la zone d'évaporation à détente étagée (E) à des pressions graduellement décroissantes jusqu'à une pression voisine de la pression atmosphérique. La vapeur générée par la détente est collectée à chaque niveau de pression correspondant à un étage et condensée pour réchauffer dans la zone (C) de réchauffage étagé le milieu d'attaque de manière séquentielle. La bouillie résultant de l'attaque, contenant la liqueur enceinte, circule à contre-courant du milieu d'attaque. Ainsi, le premier étage de détente (E) alimente l'étage de réchauffage correspondant de la zone (C) et ce, d'étage en étage (voir la figure 3).

Mais, la vapeur générée par le premier étage de détente, parce que de pression insuffisante, ne permet pas de porter le milieu d'attaque à la température requise. C'est pourquoi, est pratiquée une ultime étape de réchauffage dudit milieu d'attaque par l'utilisation de vapeur vive juste avant son entrée dans la zone d'attaque (D).

A la sortie de la zone d'évaporation à détente étagée (E), le milieu aqueux refroidi, contenant la liqueur enceinte et les impuretés inattaquées, entre dans une zone de dilution (F) qui reçoit des eaux de lavage des résidus inattaqués (contenant de l'aluminate de sodium) provenant de la zone (N). Puis, le milieu aqueux refroidi est introduit dans une zone de séparation liquide-solide (G) dans laquelle s'effectue la séparation de la liqueur enceinte et des impuretés inattaquées qui constituent les boues rouges.

Les boues rouges, imprégnées de la liqueur enceinte, sont lavées dans la zone de lavage (N) et les eaux de lavage sont renvoyées dans la zone de dilution (F) précédemment évoquée pour récupérer de la liqueur enceinte.

Quant à la liqueur enceinte provenant de la zone (G), elle subit une ultime séparation dans la zone (H), puis est refroidie dans une zone d'échange thermique (I), et, enfin, est ensemencée dans la zone (J) au moyen de germes provenant de la zone de séparation (K). La liqueur enceinte ensemencée, placée dans les conditions thermiques appropriées, est le siège de la précipitation du trihydroxyde d'aluminium Al(OH)₃ (à partir de l'aluminate de sodium). Le milieu de précipitation, formé de la liqueur décomposée et du précipité Al(OH)₃, est soumis à séparation dans la zone (K). La liqueur décomposée est envoyée dans l'échangeur thermique (I) et le trihydroxyde d'aluminium, après lavage dans la zone (L), est soumis à une calcination dans la zone (M), pour donner l'alumine Al₂O₃, objet du procédé.

A la sortie de l'échangeur thermique (I), la liqueur décomposée est introduite avec la bauxite broyée dans la zone de mélange M où elle y est également ajustée en soude active (pour compenser les pertes dans le cycle d'attaque). La bouillie ainsi formée passe par les diverses étapes du réchauffage, de l'attaque et de la précipitation du trihydroxyde d'aluminium tel que antérieurement décrit.

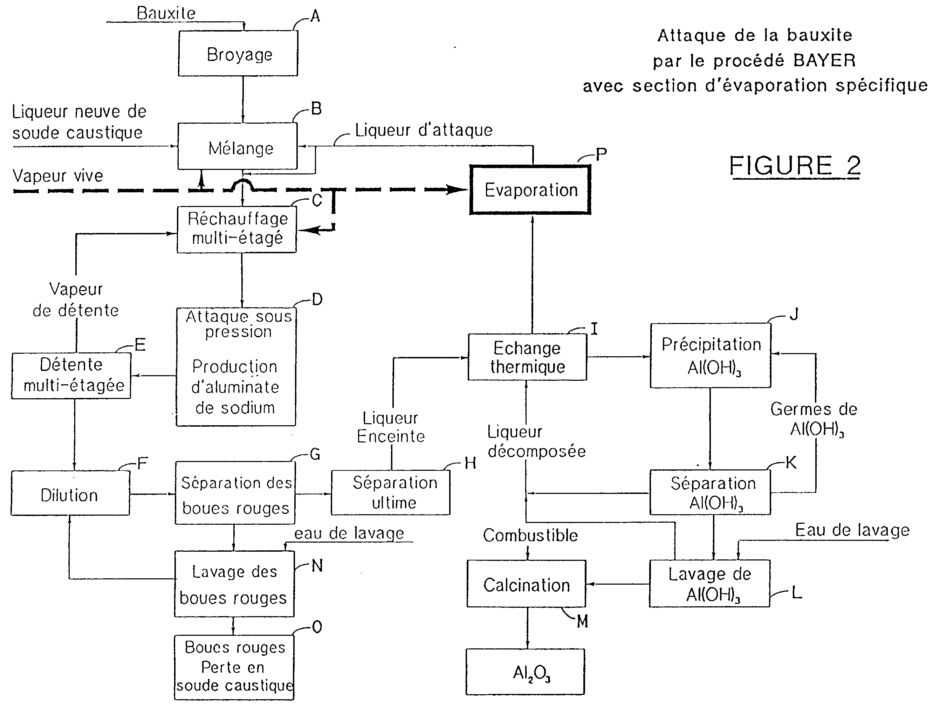

Selon la figure 2, qui comporte, comme dans la figure 1 une zone d'évaporation à détente étagée (E) mais qui s'en distingue par la présence d'une section d'évaporation spécifique (P), le cheminement par étapes du procédé d'attaque de la bauxite depuis les zones de broyage (A) et de mélange (B) jusqu'à la zone de calcination (M) du trihydroxyde d'aluminium, est identique à celui décrit dans le cadre de la figure 1.

Mais, à la différence de la figure 1, à la sortie de l'échangeur thermique (I), la liqueur décomposée passe dans la section d'évaporation spécifique (P), chauffée par de la vapeur vive, section munie d'une zone d'évaporation à détente étagée et d'une zone de réchauffage par étage ou à multiples effets, dans laquelle on élimine, par évaporation, la quantité d'eau nécessaire et complémentaire de celle déjà évaporée dans la zone d'évaporation à détente étagée (E) pour assurer la balance en eau de l'installation de production d'alumine.

Selon la figure 3, les zones de détente (E) et de réchauffage (C) montrent non seulement leur caractère étagé, mais également les liaisons vapeurs existant entre la zone (E) de détente (FT₁ à Ftₙ) et la zone (C) de réchauffage (H₁ à Hₙ). Le milieu aqueux (la liqueur enceinte) provenant de l'attaque est refroidi par évaporation dans la zone des évaporateurs à détente étagée (FT₁ à FTₙ), et la liqueur appauvrie en aluminate de sodium (liqueur décomposée) recueillie après la précipitation et la séparation de Al(OH)₃ est réchauffée dans la zone des réchauffeurs étagés (Hₙ à H₁) et portée, dans un réchauffeur H₀ alimenté en vapeur vive, à la température souhaitée pour permettre l'attaque de la bauxite, avant d'être mise en oeuvre dans les zones de mélange (B) et/ou d'attaque (D).

Ainsi, il apparaît clairement que :
- de très importantes quantités de vapeur entrent en jeu et sont consommées dans le cycle d'attaque de la bauxite, que ces quantités de vapeur ne sont pas exploitées d'une manière performante et synchronisées, ce qui augmente le prix de revient de l'alumine produite ;
- l'exploitant ne peut pas optimiser le réglage synchronisé de la température et de la concentration en soude active de la liqueur destinée à l'attaque de la bauxite.

Il découle de ces observations majeures que, pour atteindre les niveaux de température et de concentration assignés dans le procédé BAYER au milieu d'attaque, une quantité d'eau approximativement constante (par tonne d'alumine produite) doit sortir du cycle d'attaque de la bauxite par évaporation. Cette évaporation peut se faire soit totalement dans la zone d'évaporation à détente étagée (E) de la liqueur enceinte provenant de la section d'attaque, soit encore en ajoutant à la zone d'évaporation à détente étagée (E) précitée une section d'évaporation spécifique (P) traitant la liqueur décomposée.

Dans le cas où une unité de production d'alumine selon le procédé BAYER est seulement munie d'une zone d'évaporation à détente étagée (E), cette unité n'a pas de marge de manoeuvre possible pour augmenter sa productivité en alumine ou pour répondre aux variations physico-chimiques de la bauxite car, dans l'un ou l'autre cas, pour répondre à une telle demande, il faudrait augmenter :
- la concentration en soude active de la liqueur d'attaque,
- ou la quantité d'eau à évaporer, c'est-à-dire augmenter la capacité évaporatoire de la zone d'évaporation à détente étagée (E). Comme la capacité évaporatoire totale de cette zone (E) n'a pas de liberté de fluctuation pour répondre à la demande, l'installation d'une section d'évaporation spécifique (P) s'impose alors pour augmenter la capacité évaporatoire totale de l'installation : cette augmentation de la capacité évaporatoire entraînera une augmentation substantielle de la consommation en vapeur vives.

Dans le cas où l'unité de production d'alumine selon le procédé BAYER est munie non seulement de la zone d'évaporation à détente étagée (E) mais aussi de la section d'évaporation spécifique (P), la demande de l'augmentation de la productivité entraîne également la nécessité d'augmenter la capacité évaporatoire totale de l'installation. Pour répondre à cette demande, l'augmentation de la capacité évaporatoire de la section d'évaporation spécifique (P) s'impose, ce qui provoque également une augmentation substantielle de consommation de vapeur vive.

Pour mieux illustrer l'état de la technique, on connaît d'après le EP-A-0335707, un procédé de recyclage de la liqueur décomposée qui, à la place de la série d'étages d'évaporation à détente et de réchauffage associés, utilise un échangeur de chaleur de nature différente mettant en oeuvre un médium (fluide de transfert thermique) pour assurer le transfert de chaleur entre la liqueur enceinte et la liqueur décomposée. Même s'il se peut qu'il y ait une augmentation de la quantité de chaleur transférée, le problème, par exemple, de l'utilisation de la différence de température ci-dessus évoqué entre le dernier étage de réchauffage par vapeur de détente et la température de l'attaque, reste posé et non complètement résolu. Dès lors, ce procédé ne permet pas la maîtrise synchronisé de la température et de la concentration en soude active de la liqueur destinée à l'attaque.

On connaît également d'après le AU-554379, une ou plusieurs sections d'évaporation insérées dans la chaîne traditionnelle de recyclage de la liqueur décomposée du procédé BAYER. La ou les sections comprennent au moins un réchauffeur tubulaire alimenté en vapeur vive associé à un récipient d'expansion.

Cette chaîne traditionnelle de recyclage comprend :
- plusieurs étages de détente destinés à refroidir la liqueur enceinte et à générer de la vapeur ;
- plusieurs étages de réchauffage destinés à réchauffer la liqueur décomposée qui circule à contre-courant de la liqueur enceinte, chaque étage de réchauffage étant alimenté par la vapeur générée par chaque étage de détente ;
- un étage ultime de réchauffage alimenté en vapeur vive et disposé à la sortie du dernier étage de réchauffage alimenté en vapeur de détente.

La ou les sections d'évaporation comprennent un ou plusieurs volumes d'expansion disposés à la sortie d'un ou plusieurs étages de réchauffage.

Cette chaîne manifeste des inconvénients majeurs tels que, par exemple :
- les niveaux de température et de concentration de la liqueur recyclée requises par l'attaque du minerai ne peuvent être atteints simultanément par les moyens mis en oeuvre ;
- une fraction seulement de la liqueur décomposée est réchauffée à une température supérieure à celle de l'attaque avant d'être mélangée avec le milieu aqueux contenant la bauxite pour atteindre une température supérieure à celle de l'attaque ;.
- la fragmentation de la liqueur décomposée conduit à l'augmentation du nombre de réchauffeurs tubulaires nécessaires à la réalisation de la performance recherchée : il en découle une forte augmentation de l'investissement sans aucun avantage énergétique.

### EXPOSE DE L'INVENTION

Dès lors, l'invention, qui concerne le procédé BAYER, poursuit plusieurs buts pour aboutir au perfectionnement de ce procédé ainsi qu'au perfectionnement de la chaîne d'attaque correspondante.

L'un des buts de l'invention est simultanément de réchauffer la liqueur décomposée à la température souhaitée et de porter sa concentration à une valeur optimale pour l'attaque du minerai.

Un autre but de l'invention est de rendre souple le procédé afin de lui permettre une adaptation rapide aux aléas de la production.

Un autre but de l'invention est de permettre à l'exploitant d'augmenter très significativement la capacité évaporatoire du cycle Bayer sans augmentation significative de la consommation de vapeur vive.

Un autre but de l'invention est d'assurer une capacité d'évaporation supplémentaire dans une unité Bayer existante, moyennant un investissement faible, très inférieur à celui qui était nécessaire à la mise en place d'une section spécifique d'évaporation.

Enfin, un autre but est d'augmenter le rendement énergétique de l'installation de production d'alumine selon le procédé Bayer, tout en permettant à l'exploitant, qui peut disposer d'une plus grande quantité d'eau, de protéger l'environnement par une diminution des rejets alcalins.

### Perfectionnement au procédé Bayer

Le procédé selon l'invention pour porter simultanément à une température et à une concentration optimales un milieu aqueux destiné à l'attaque d'un minerai de bauxite dans une installation de production d'alumine selon le procédé Bayer, qui comprend les phases successives (a) à (f), dans lesquelles :
a) on refroidit et évapore, dans une zone d'évaporation à détente étagée le milieu aqueux provenant de l'attaque contenant la liqueur enceinte ;
b) on sépare les stériles, précipite le trihydroxyde d'aluminium et récupère le milieu aqueux destiné à l'attaque, formé de la liqueur décomposée ;
c) éventuellement, on élimine par évaporation, dans une section d'évaporation spécifique, la quantité d'eau nécessaire et complémentaire à celle déjà évaporée dans la phase (a) ;
d) on réchauffe en plusieurs étages le milieu aqueux destiné à l'attaque ;
e) on utilise dans chacun des étages de la phase de réchauffage (d) la vapeur de détente générée à chacun des étages de la phase d'évaporation (a) ;
f) on réchauffe par de la vapeur vive le milieu aqueux destiné à l'attaque provenant de la phase de réchauffage (d) ;
se caractérise en ce que l'on réalise en plus de toutes ces phases une phase de réchauffage et d'évaporation simultanés du milieu aqueux destiné à l'attaque.

Ainsi, il apparaît que les procédés continus d'attaque alcaline de la bauxite selon l'état de la technique, comportant des phases :
- de refroidissement par évaporation à détentes étagées [phase (a)] du milieu aqueux provenant de l'attaque,
- et de réchauffage par étage [phase (d)] du milieu aqueux destiné à l'attaque en exploitant les vapeurs produites par les détentes successives,
qu'ils soient munis ou non d'une section d'évaporation spécifique (comme la zone P dans les figures 2 et 3 consommant de la vapeur vive),
peuvent encore être perfectionnés et le sont selon l'invention grâce à l'intégration, au sein des phases précitées, d'une phase nouvelle de réchauffage et d'évaporation simultanés du milieu aqueux destiné à l'attaque de la bauxite dont les effets se mesurent :
- par l'obtention d'un milieu aqueux destiné à l'attaque dont la concentration en soude active et la température peuvent être réglées d'une manière synchronisée à des niveaux conformes aux objectifs assignés pour ladite attaque ;
- par une amélioration substantielle du rendement énergétique du procédé Bayer en augmentant la capacité évaporatoire totale de l'installation sans pour autant augmenter sensiblement la consommation globale de vapeur vive , [cette consommation globale étant définie par le cumul de la vapeur vive consommée dans la zone de mélange (B), dans la section d'évaporation spécifique (P) quand elle existe, et dans la zone de réchauffage étagée de la phase (d)].

La phase de réchauffage et d'évaporation simultanés selon l'invention peut être intégrée en un point quelconque :
- de la phase de réchauffage par étage [phase (d) du procédé] du milieu aqueux destiné à l'attaque ;
- et/ou de la phase d'évaporation spécifique [phase (c) du procédé].

La section d'évaporation spécifique P [phase (c)] peut être munie des mêmes moyens d'évaporation à détente étagée que la phase d'évaporation (a) et de réchauffage à plusieurs étages [de la phase (d)], ou peut être composée d'un multiple effet.

Dans le cas où la section d'évaporation spécifique est du type à détente étagée, elle comporte :
- n étages d'évaporateurs à détente destinés à générer de la vapeur par détente et
- n étages de réchauffage destinés à réchauffer la liqueur décomposée provenant de la précipitation de Al(OH)₃, chaque étage de réchauffage (qui comporte au moins un réchauffeur tubulaire) utilisant la vapeur générée par chaque étage de détente de même rang ;
- au moins un ultime étage de réchauffage (qui comporte au moins un réchauffeur tubulaire) alimenté en vapeur vive et disposé à la sortie du premier étage de réchauffage alimenté en vapeur de détente.

Dans le cas où la section d'évaporation spécifique P comporte un multiple effet, la phase de réchauffage et d'évaporation simultanée est intégrée dans la zone de digestion et la vapeur (buée) éventuellement excédentaire produite par évaporation est utilisée pour alimenter l'un des étages (effets) compatible avec sa pression de fonctionnement. Il en résulte une réduction significative de la consommation de vapeur vive de ce multiple effet.

C'est pourquoi, selon l'invention, cette phase de réchauffage et d'évaporation simultanés est intégrée dans ladite phase de réchauffage par étage du cycle d'attaque et/ou de la section d'évaporation spécifique, de telle sorte que :
- elle puisse recevoir le milieu aqueux (la liqueur décomposée) à réchauffer et/ou à évaporer du premier étage de la zone de réchauffage (alimenté en vapeur vive) et/ou de l'un au moins des étages suivants de ladite zone de réchauffage (alimentés en vapeur de détente), en particulier du premier étage de réchauffage qui est alimenté en vapeur de détente ;
- elle puisse alimenter en milieu aqueux (liqueur d'attaque) réchauffé et/ou soumis à évaporation, la zone où se produit l'attaque de la bauxite, ou bien le premier étage (alimenté en vapeur vive) de la zone de réchauffage qui, à son tour, alimentera la zone où se produit l'attaque de la bauxite ;
- et/ou puisse alimenter en milieu aqueux (liqueur décomposée) le réchauffeur de rang n de la phase de réchauffage (d) quand elle est intégrée dans la section d'évaporation spécifique de la phase (c).

Le point d'intégration le plus favorable pour l'implantation de la phase de réchauffage et d'évaporation simultanés est déterminé par une étude détaillée préalable qui en révèle l'intérêt majeur. Mais il est fréquent que le point d'intégration de la phase de réchauffage et d'évaporation simultanée selon l'invention se situe entre l'ultime étage de réchauffage alimenté en vapeur vive et le premier étage de réchauffage alimenté en vapeur de détente.

La vapeur produite (en quantité supplémentaire par rapport à l'état de la technique) par ladite phase de réchauffage et d'évaporation simultanés, peut être :
- consommée in situ dans ladite phase selon l'invention ;
- et/ou utilisée dans l'un au moins des étages de réchauffage des phases (c) et/ou (d) et/ou, en particulier, dans le premier étage de réchauffage alimenté en vapeur vive ;
- et/ou exploitée dans au moins un réchauffeur tubulaire intégré à cet effet entre au moins deux des réchauffeurs tubulaires de rang (K) et (K-1) des phases (d) et/ou (c) (K prenant une valeur comprise entre 1 et n) ;
- et/ou consommée, en cas d'excédent dans l'un des effets du multiple effet de la phase (c) induisant une réduction de la consommation de la vapeur vive dudit multiple effet ;
- et/ou utilisée pour produire de l'eau chaude à température élevée (de 80°C-98°C par exemple) et/ou pour réchauffer, la liqueur décomposée servant à la préparation de la bouillie de bauxite.

Ainsi, et par rapport à l'état de la technique illustrée par les figures 1, 2 et 3, la phase de réchauffage et d'évaporation simultanés selon l'invention est intégrée dans l'une et/ou l'autre des zones de réchauffage étagée (c) et/ou (d) du procédé BAYER.

La phase de réchauffage et d'évaporation simultanés selon l'invention comporte au moins un étage, c'est-à-dire un étage (simple effet) ou plusieurs étages (multiples effets) de réchauffage et d'évaporation simultanés, chaque étage pouvant se composer de un ou plusieurs moyens de réchauffage et d'évaporation simultanés fonctionnant en série ou en parallèle.

### Intégration de la phase de réchauffage et d'évaporation simultanée dans la zone de réchauffage [phase (d)] précédant l'attaque.

Dans le cas, par exemple, de la présence d'un seul étage pour la phase de réchauffage et d'évaporation simultanés selon l'invention, ladite phase peut être préférentiellement intégrée entre le premier étage de la zone de réchauffage (alimenté en vapeur vive) et la zone de mélange et/ou d'attaque de la bauxite avec la liqueur d'attaque. La vapeur (buées) générée par ladite phase est utilisée dans ladite phase.

Enfin, il est possible dans certains cas de réaliser un seul étage conforme à l'invention, cet étage étant composé d'au moins deux évaporateurs-réchauffeurs simultanés, fonctionnant en série ou en parallèle pour la phase liqueur et sous la même pression de fonctionnement pour la phase vapeur (buées).

Dans le cas où la phase de réchauffage et d'évaporation simultanés du milieu aqueux destiné à l'attaque comporte au moins deux étages, l'un des étages peut être placé entre la sortie de la phase de réchauffage par de la vapeur vive (phase f) et l'entrée de la zone de mélange et/ou d'attaque de la bauxite et un autre desdits étages peut être placé entre la sortie du premier des étages de la phase de réchauffage (phase d) par la vapeur de détente (générée par la phase de refroidissement (a) et l'entrée de la phase de réchauffage par de la vapeur vive (phase f).

Mais, il est aussi possible que l'un des étages étant placé à la sortie de la phase de réchauffage par de la vapeur vive [phase (f)] et l'entrée de la zone de mélange et/ou d'attaque de la bauxite, les autres étages soient placés entre la sortie du premier des étages de la phase de réchauffage (phase (d) par la vapeur de détente [générée par la phase de refroidissement (phase (a)] et l'entrée de la phase de réchauffage par de la vapeur vive [(phase (f)].

Il est possible enfin, dans le cas où la phase de réchauffage et d'évaporation simultanés comporte au moins deux étages, que lesdits étages soient placés entre l'entrée de la phase de réchauffage par de la vapeur vive (phase f) et la sortie du premier des étages de la phase de réchauffage [phase (d)] par de la vapeur de détente.

Dans le cas de la présence d'au moins deux étages pour la phase de réchauffage et d'évaporation simultanés selon l'invention, la vapeur générée par l'un des étages de réchauffage et d'évaporation simultanés est utilisée pour alimenter l'étage de réchauffage et d'évaporation simultanés qui le précède, et ce de proche en proche.

Quel que soit le nombre d'étages mis en oeuvre dans la phase de réchauffage et d'évaporation simultanés du milieu aqueux destiné à l'attaque, le premier étage de la phase de réchauffage et d'évaporation simultanés est alimenté en vapeur vive.

### Intégration de la phase de réchauffage et d'évaporation simultanée dans la section d'évaporation spécifique P.

Lorsque l'unité de production d'alumine selon le procédé BAYER est munie d'une section d'évaporation spécifique en plus de la zone d'évaporation étagée existant dans la zone d'attaque pour réchauffer et concentrer la liqueur décomposée, la phase de réchauffage et d'évaporation simultanée selon l'invention peut y être également intégrée et peut comporter un ou plusieurs étages dans le cas où ladite zone d'évaporation est équipée d'une section d'évaporation du type à détente étagée.

Dans le cas, par exemple, de la présence d'un seul étage (simple effet) pour la phase de réchauffage et d'évaporation simultanés selon l'invention, ladite phase peut être intégrée entre le premier étage de la zone de réchauffage (alimenté en vapeur vive) de ladite section et le premier étage de réchauffage alimenté en vapeur de détente. La vapeur (buées) générée par ladite phase est consommée dans ladite phase.

Comme dit précédemment, il est possible de réaliser un seul étage à partir d'au moins deux évaporateurs-réchauffeurs simultanés sous les conditions précitées.

Dans le cas où la phase de réchauffage et d'évaporation simultanés du milieu aqueux destiné à l'attaque comporte au moins deux étages (double effet), l'un des étages peut être placé entre la sortie de la phase de réchauffage par de la vapeur vive [de la phase (c)] et l'entrée de l'étage de réchauffage de rang n de la phase (d) de réchauffage et un autre desdits étages peut être placé entre la sortie du premier des étages de la phase de réchauffage [de la phase (c) par la vapeur de détente et l'entrée de l'étage de réchauffage par de la vapeur vive de la phase (c)].

Mais, il est aussi possible que l'un des étages étant placé à la sortie de la phase de réchauffage par de la vapeur vive [de la phase (c)] et l'entrée de l'étage de réchauffage de rang n de la phase (d) de réchauffage, les autres étages soient placés entre la sortie du premier des étages de réchauffage [de la phase (c)] par la vapeur de détente et l'entrée de la phase de réchauffage par de la vapeur vive [de la phase (c)].

Il est possible enfin, dans le cas où la phase de réchauffage et d'évaporation simultanés comporte au moins deux étages, que lesdits étages soient placés entre l'entrée de la phase de réchauffage par de la vapeur vive [de la phase (c)] et la sortie du premier des étages de la phase de réchauffage [phase (c)] par de la vapeur de détente.

Dans le cas de la présence d'au moins deux étages pour la phase de réchauffage et d'évaporation simultanés selon l'invention, la vapeur générée par l'un des étages de réchauffage et d'évaporation simultanés est utilisée pour alimenter l'étage de réchauffage et d'évaporation simultanés qui le précède, et ce de proche en proche.

Quel que soit le nombre d'étages mis en oeuvre dans la phase de réchauffage et d'évaporation simultanés, le premier étage de la phase de réchauffage et d'évaporation simultanés est alimenté en vapeur vive.

Enfin, la vapeur générée de manière excédentaire par le ou les étages de la phase de réchauffage et d'évaporation simultanés, peut être utilisée comme dit précédemment, hormis dans son application au multiple effet.

Le réchauffage et l'évaporation simultanés du milieu aqueux destiné à l'attaque dans la phase particulière selon l'invention, peut se faire d'une manière préférentielle par l'utilisation d'un évaporateur tubulaire à film descendant. Ce film chauffé est entraîné, de haut en bas, non seulement par la gravité, mais aussi mécaniquement par la vapeur générée in situ à partir dudit film jusqu'à aboutir à une séparation entre le liquide concentré et la vapeur générée in situ.

A cette phase de réchauffage et d'évaporation simultanés peut être préférentiellement associée, en son amont, une étape préalable de réchauffage du milieu aqueux à réchauffer et concentrer par mélange direct de la vapeur générée par ladite phase avec le milieu aqueux.

Le procédé tel que présenté est utilisable même si la bauxite est alimentée dans la liqueur décomposée avant son passage dans la zone de réchauffage multi-étagée.

### Perfectionnement à la chaîne d'attaque du procédé Bayer

L'invention concerne également une chaîne pour porter simultanément un milieu aqueux destiné à l'attaque d'un minerai de bauxite selon le procédé Bayer à une température et concentration adéquates par évaporation dans une installation de production d'alumine.

D'une manière connue, cette chaîne comporte (selon la figure 3) :
- une zone d'évaporateurs-détendeurs étagés, disposés en série, dans lesquels circule un milieu aqueux provenant de l'attaque d'une bauxite issu d'un réacteur d'attaque ;
- une zone de réchauffeurs étagés, disposés en série et dans lesquels circule, à contre-courant de la zone précitée, le milieu aqueux destiné à l'attaque de la bauxite, chaque réchauffeur recevant la vapeur de détente de chaque évaporateur-détendeur qui lui correspond directement ;
- un ou plusieurs réchauffeurs connectés à une source de vapeur vive et reliés à l'entrée d'un dispositif de mélange et/ou d'attaque de la bauxite broyée par la liqueur d'attaque pour porter cette liqueur provenant de la sortie du premier des réchauffeurs appartenant à la série des réchauffeurs alimentés en vapeur de détente, à la température nécessaire à l'attaque ;
- une section d'évaporation spécifique munie d'une zone constituée d'un multiple effet ou d'une zone d'évaporateurs-détendeurs étagés dans lesquels circule le milieu aqueux à réchauffer et évaporer constitué par la liqueur décomposée provenant de la précipitation de Al(OH)3 et d'une zone de réchauffeurs étagés disposés en série dans laquelle circule ladite liqueur décomposée, chaque réchauffeur recevant la vapeur de détente de chaque évaporateur-détendeur qui lui correspond.

Mais, selon l'invention, cette chaîne se distingue de l'état de la technique et s'en caractérise par le fait que l'on y intègre une section de réchauffage et procédé BAYER que dans la section d'évaporation spécifique de la phase (c) dudit procédé, quand cette dernière est constituée d'évaporateurs à détente étagée.

Cette section de réchauffage et d'évaporation simultanés peut être placée en un point quelconque de l'une et/ou l'autre des phases (c) et (d) de la section de réchauffage par étage, mais choisi de manière judicieuse pour chaque cas, après analyse des besoins.

Cette section selon l'invention est connectée à la section de réchauffage par étage de telle sorte que :
- elle puisse recevoir le milieu aqueux (liqueur décomposée à réchauffer et/ou à évaporer) en provenance du premier étage alimenté en vapeur vive de la zone des réchauffeurs étagés des phases (c) et/ou (d) et/ou de l'un au moins des étages suivants de ladite zone de réchauffage, alimentés en vapeur de détente et, en particulier, le premier d'entre eux ;
- elle puisse alimenter en milieu aqueux d'attaque (liqueur d'attaque) une fois réchauffée et/ou évaporée selon les conditions souhaitées et fixées, soit directement la zone où s'effectue le mélange et/ou l'attaque de la bauxite, soit indirectement par sa connexion intermédiaire avec le premier étage (alimenté en vapeur vive) de la zone des réchauffeurs, ce dernier délivrant, à la zone d'attaque, le milieu aqueux qui lui est destiné, porté par réchauffage et/ou évaporation aux conditions adéquates pour l'attaque, soit encore le réchauffeur de rang n de la phase (d) du procédé.

La section de réchauffage et d'évaporation simultanés (du milieu aqueux destiné à l'attaque) selon l'invention est alimentée pour partie en vapeur vive et génère à son tour de la vapeur (buées) :
- consommée dans ladite section ;
- et/ou utilisée dans l'un au moins des étages de réchauffage des phases (c) et/ou (d) et/ou, en particulier, dans le réchauffeur Ho en combinant l'alimentation dudit réchauffeur en vapeur vive avec tout ou partie de la vapeur produite (buées) dans ladite section de réchauffage et d'évaporation simultanés ;
- et/ou exploitée dans au moins un réchauffeur tubulaire spécialement intégré à cet effet entre au moins deux des réchauffeurs des phases (c)et/ou (d) ;
- et/ou consommée en cas d'excédent dans l'un des effets du multiple effet de la phase (c) ;
- et/ou utilisée pour produire de l'eau chaude ou pour réchauffer la liqueur décomposée servant à la préparation de la bouillie de bauxite dans des moyens appropriés.

La section de réchauffage et d'évaporation simultanés (du milieu aqueux destiné à l'attaque) comporte au moins un étage, c'est-à-dire un étage (simple effet) ou plusieurs étages (multiples effets) de réchauffage et d'évaporation simultanés, chaque étage pouvant se composer de un ou plusieurs moyens de réchauffage et d'évaporation simultanés fonctionnant en série ou en parallèle. Dans le cas où la section selon l'invention comporte un seul étage de réchauffage et d'évaporation simultanés (simple effet), ledit étage peut être préférentiellement placé:
- pour la phase (d) entre le premier réchauffeur (de la zone de réchauffage) alimenté en vapeur vive et la zone de mélange et/ou d'attaque de la bauxite;
- et/ou pour la phase (c), entre le premier réchauffeur alimenté en vapeur vive et l'entrée du réchauffeur de rang n de la phase (d). La vapeur générée par ledit étage selon l'invention est utilisée in situ.

Dans le cas où la section de réchauffage et d'évaporation simultanés selon l'invention comporte deux étages (double effet), les deux étages peuvent être insérés:
- pour la phase (d) entre la sortie du réchauffeur alimenté en vapeur de détente à la pression la plus élevée et l'entrée de la zone de mélange et/ou d'attaque de la bauxite par la liqueur d'attaque ;
- et/ou pour la phase (c), entre le premier réchauffeur alimenté en vapeur vive et l'entrée du réchauffeur de rang n de la phase (d).

Mais, il est aussi possible, dans le cas où la section de réchauffage et d'évaporation simultanés comporte deux étages, que l'un des étages étant placé à la sortie du premier réchauffeur alimenté par de la vapeur vive des phases (c) et/ou (d), l'autre étage soit placé entre la sortie du premier des réchauffeurs de la zone de réchauffage [phases (c) et/ou (d)] alimenté en vapeur de détente [générée par la phase de refroidissement] et l'entrée du premier réchauffeur alimenté par de la vapeur vive.

Enfin, il est également possible, dans le cas où la section de réchauffage et d'évaporation simultanés comporte deux étages, que ces étages soient placés entre l'entrée du premier réchauffeur alimenté en vapeur vive et la sortie du premier des réchauffeurs alimenté en vapeur de détente [phase (c)] de la zone de réchauffage des phases (c) et/ou (d).

Dans le cas, par exemple, où la section selon l'invention comporte trois étages ou plus, le premier étage est intégré comme dit précédemment, dans les phases (c) et/ou (d) les deuxième et troisième étages et autres étages pouvant être placés en série entre la sortie du premier réchauffeur de la série des réchauffeurs alimentés par la vapeur de détente et l'entrée du réchauffeur alimenté en vapeur vive.

Quel que soit le nombre d'étages (effets) que comporte la section selon l'invention :
- le premier étage de la section est alimenté en vapeur vive ;
- la vapeur générée par chaque étage de la section est utilisée pour alimenter l'étage de réchauffage et d'évaporation simultanés qui le précède et ce de proche en proche, ou encore alimenter en vapeur, quand elle est excédentaire, un utilisateur externe comme dit précédemment.

D'une manière préférentielle, chaque étage de réchauffage et d'évaporation simultanés du milieu aqueux destiné à l'attaque est à film descendant et comporte, dans sa partie haute, un échangeur à tubes verticaux, un système de distribution du film descendant du milieu aqueux destiné à l'attaque et, dans sa partie basse, un séparateur liquide-vapeur permettant de séparer le milieu aqueux concentré, de la vapeur générée in situ réutilisable.

Chaque étage de réchauffage et d'évaporation simultanés selon l'invention peut être muni préférentiellement en son amont d'un réchauffeur dudit milieu aqueux par mélange direct de ce milieu destiné à l'attaque avec de la vapeur générée dans ledit étage de réchauffage et d'évaporation simultanés. Dans ce cas, ledit réchauffeur par mélange est relié audit réchauffeur et évaporateur simultanés pour assurer la circulation du milieu aqueux destiné à l'attaque et le réchauffer par injection directe de la vapeur produite par ledit réchauffeur-évaporateur simultanés.

Ainsi, une installation complète pour la production d'alumine selon le procédé Bayer peut être perfectionnée grâce à l'invention, par l'intégration des moyens nécessaires au réchauffage et à l'évaporation simultanés du milieu aqueux destiné à l'attaque de la bauxite, ces moyens assurant le réglage synchronisé de la température et de la concentration en soude active dudit milieu aqueux.

L'invention offre l'avantage supplémentaire de pouvoir être insérée dans les chaînes existantes de production d'alumine, par simples dérivations sans nécessiter d'autres modifications technologiques de la chaîne.

D'autres avantages du procédé et de la chaîne de recyclage selon l'invention apparaîtront à la lecture de la description détaillée de l'invention, en se référant aux dessins, donnés à titre d'illustration, dans lesquels :

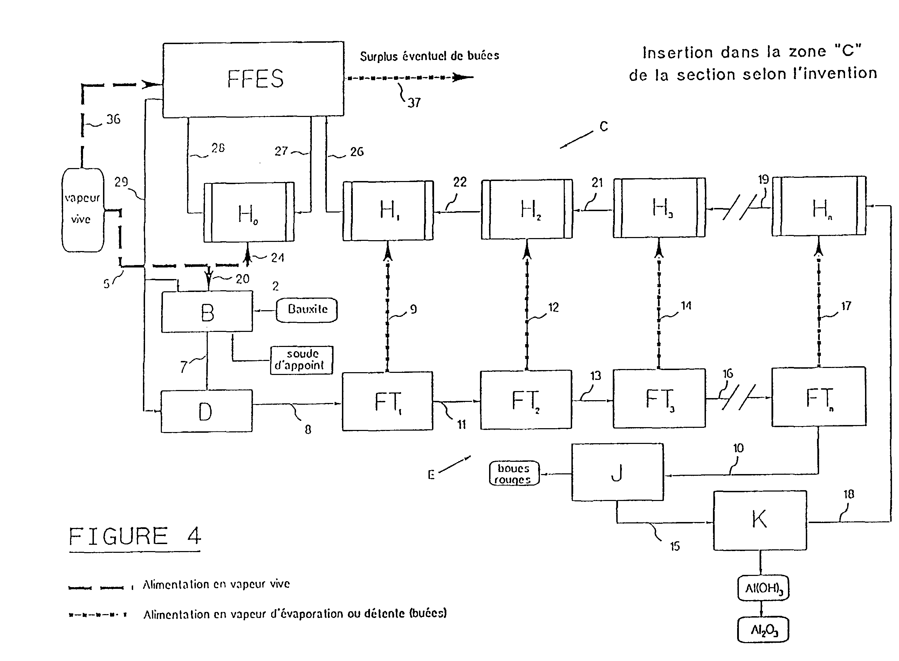

- la figure 4 représente une installation de production d'alumine selon l'état de la technique (procédé Bayer) munie du perfectionnement selon l'invention comprenant :
   * les phases successives de refroidissement par évaporation à détente étagée du milieu aqueux provenant de l'attaque, de réchauffage étagé du milieu aqueux destiné à l'attaque, en utilisant la vapeur de détente précitée ;
   * la phase de réchauffage et d'évaporation simultanés selon l'invention du milieu aqueux destiné à l'attaque pour porter simultanément la température et la concentration en soude active dudit milieu aux niveaux optimaux.

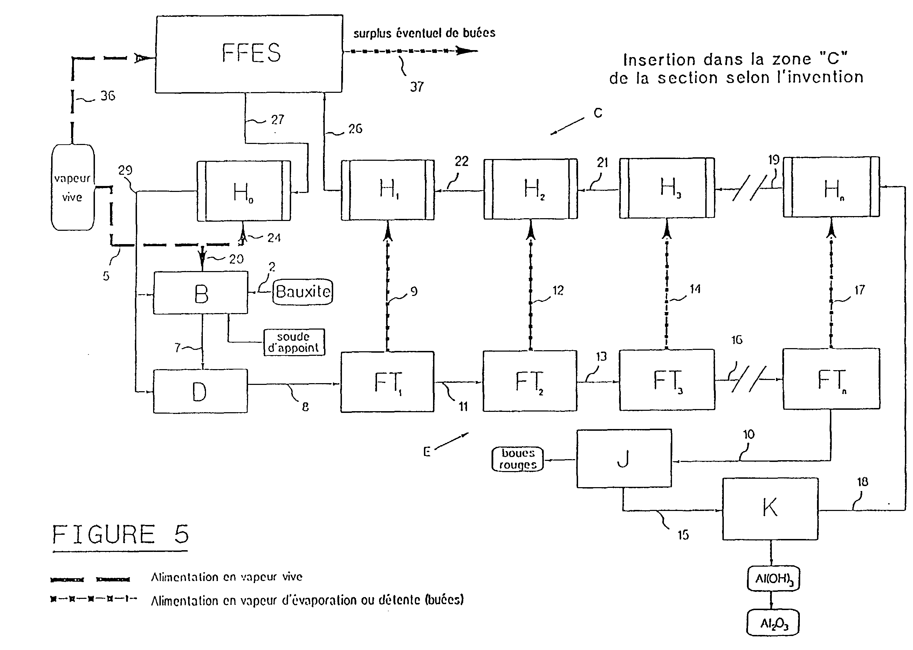

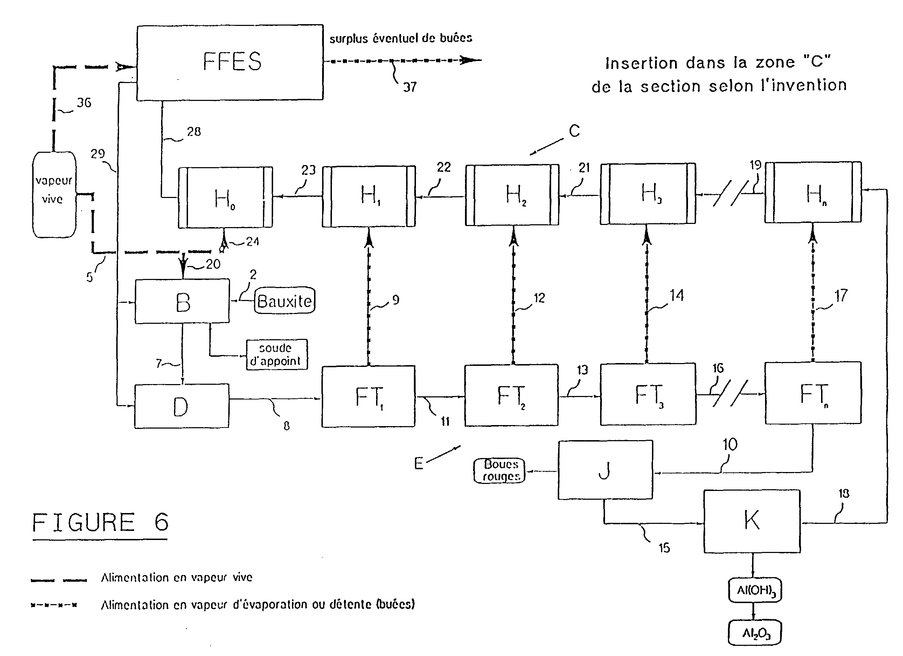

- les figures 5 et 6 représentent la même installation de production de l'alumine selon l'état de la technique (procédé Bayer), munie du perfectionnement selon l'invention, selon deux variantes :
   * l'une illustrée par la figure 5 dans laquelle la phase de réchauffage et d'évaporation simultanés selon l'invention :
      . est alimentée en milieu aqueux destiné à l'attaque par la sortie du premier des étages de la phase de réchauffage (phase d) par la vapeur de détente ;
      . et alimente, après avoir soumis à réchauffage et évaporation simultanés ledit milieu aqueux destiné à l'attaque, l'entrée de la phase de réchauffage (premier réchauffeur) par la vapeur vive.
   * l'autre illustrée par la figure 6 dans laquelle la phase de réchauffage et d'évaporation simultanés selon l'invention :
      . est alimentée par le premier réchauffeur de la phase de réchauffage au moyen de la vapeur vive ;
      . et alimente, après l'avoir soumis à réchauffage et évaporation simultanés, la zone de mélange et/ou d'attaque de la bauxite.
- la figure 7 représente une section d'évaporation spécifique, présente dans une installation de production d'alumine selon l'état de la technique (figure 3), ladite section d'évaporation spécifique étant munie du perfectionnement selon l'invention (phase FFES).
- la figure 8 représente en détail la phase de réchauffage et d'évaporation simultanés à un étage (un effet).
- la figure 9 représente en détail la phase de réchauffage et d'évaporation simultanés à un étage (un effet) comportant préférentiellement en son amont, une zone de réchauffage par mélange direct du milieu aqueux destiné à l'attaque avec de la vapeur générée par ladite phase de réchauffage et d'évaporation simultanés.
- la figure 10 représente une variante de la figure 9 comportant une recirculation (par pompe) du milieu aqueux destiné à l'attaque au sein de la phase de réchauffage et d'évaporation simultanés conforme à l'exemple 1.
- la figure 11 représente une variante de la figure 9 comportant un compresseur de la vapeur générée par la phase de réchauffage et d'évaporation simultanés.
- la figure 12 représente en détail la phase de réchauffage et d'évaporation simultanés à deux étages (double effet) selon l'invention, intégrée dans la figure 4.
- la figure 13 représente une variante de la figure 12 comportant une recirculation par pompe du milieu aqueux destiné à l'attaque dans chaque étage de la phase de réchauffage et d'évaporation simultanés et conforme à l'exemple 2.
- la figure 14 représente en détail la phase de réchauffage et d'évaporation simultanés à trois étages (triple effet).
- la figure 15 représente une variante de la figure 14 comportant une recirculation par pompe du milieu aqueux destiné à l'attaque dans chaque évaporateur de la phase de réchauffage et d'évaporation simultanés, conforme à l'exemple 3.

### DESCRIPTION DETAILLEE DE L'INVENTION

En préliminaire, il faut rappeler qu'il existe, dans le cadre du procédé Bayer, de nombreuses variantes industrielles de production de l'alumine par l'attaque alcaline des bauxites selon leurs compositions. Les différences marquantes entre ces variantes de procédé portent essentiellement sur la concentration de la liqueur d'attaque en soude active, sur le niveau de la température du milieu d'attaque et sur le temps d'attaque. Ces diverses variantes se distinguent également les unes des autres par les résultats qu'elles procurent, en particulier par la différence des rendements de production, des rendements énergétiques et par la qualité de l'alumine produite.

Comme l'invention consiste en l'intégration dans la chaîne d'attaque d'une section de réchauffage et d'évaporation simultanés, elle s'applique, avec les mêmes qualités de résultats, à toutes les variantes du procédé Bayer, les températures d'attaque et les concentrations des liqueurs telles qu'évoquées en particulier n'étant pas limitatives de l'invention.

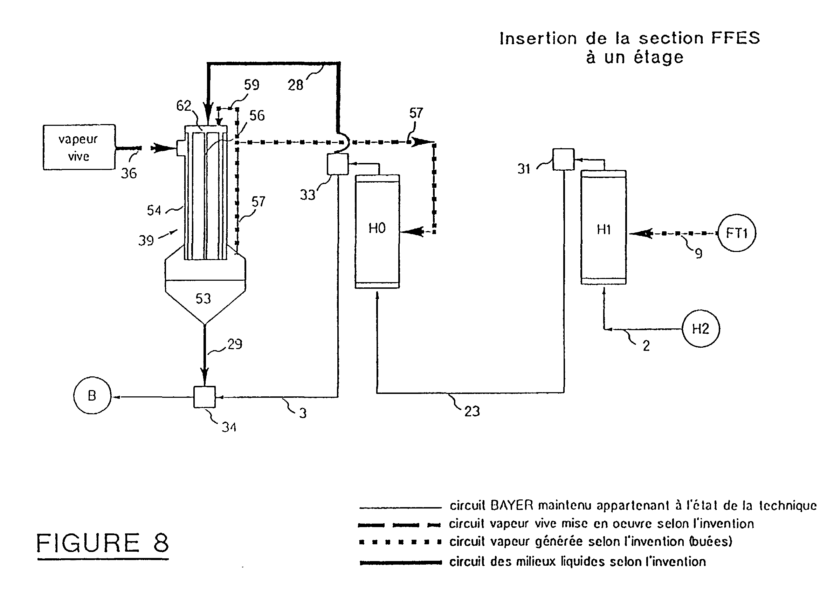

Selon les figures 4 et 8, les dispositifs composant une installation de production d'alumine selon le procédé Bayer, c'est-à-dire conformément à l'état de la technique (figure 3) comprennent, d'une manière connue, tout d'abord un mélangeur B, dans lequel est réalisé le mélange d'un minerai de bauxite arrivant par le conduit 2 avec au moins une partie d'une liqueur d'attaque (contenant la soude active) provenant de la chaîne de recyclage par le conduit 3. Auparavant, on a assuré un préchauffage de la bauxite à une température basse (entre 75 et 80°C) et un chauffage du mélange bauxite-liqueur d'attaque en (B) par utilisation de vapeur vive (véhiculée par les conduits 5 et 20) provenant de la source de vapeur vive.

Dans toutes les figures, les voies de circulation :
- de vapeur vive sont représentées en traits discontinus,
- de vapeur de détente ou d'évaporation (buées) sont représentées en traits pointillés.

Par un conduit 7, on dirige la bouillie provenant de (B) vers un réacteur (D) où s'effectue l'attaque de la bauxite par la liqueur d'attaque à chaud (à environ 145°C) et sous pression. Pour assurer la concentration optimale de la liqueur d'attaque en soude active (compensation des pertes qui interviennent dans l'ensemble du procédé de production d'alumine), la zone de mélange B est non seulement alimentée en liqueur d'attaque (par la canalisation 3) mais aussi en liqueur neuve de soude active.

Du réacteur D, on évacue, par la canalisation 8, le milieu aqueux provenant de l'attaque, formé de la liqueur enceinte contenant, en solution, l'aluminate de sodium et des stériles inattaqués, en direction d'une série (E) de détendeurs-évaporateurs FT, fonctionnant selon le principe de la détente étagée. Les détendeurs-évaporateurs successifs FT₁ à FTₙ, (connectés en série) produisent par détente du milieu aqueux provenant de l'attaque, de la vapeur (buées) servant à chauffer une série (C) de réchauffeurs tubulaires étagés H₁ à Hₙ, (également connectés en série)

Ainsi, le détendeur-évaporateur FT₁ reçoit le milieu aqueux résultant de l'attaque à une température d'environ 145°C par un conduit 8. Dans le détendeur-évaporateur FT₁, ledit milieu aqueux passe de environ 145°C à environ 135°C et produit de la vapeur par détente. Cette vapeur, dont la température est d'environ 128°C, alimente le réchauffeur H₁ par le conduit 9.

De même, le détendeur-évaporateur FT₂ reçoit le milieu aqueux provenant de FT₁, dont la température est d'environ 135°C, par un conduit 11. Dans le détendeur-évaporateur FT₂, le milieu aqueux produit, par détente, de la vapeur qui alimente, par un conduit 12, le réchauffeur H₂. Il en est de même du détendeur-évaporateur FT₃ qui reçoit le milieu aqueux chaud du détendeur-évaporateur FT₂ par le conduit 13 et qui alimente en vapeur de détente le réchauffeur H₃ par un conduit 14.

Le cycle de détente se poursuit ainsi de proche en proche : le détendeur-évaporateur FTₙ reçoit le milieu aqueux du détendeur-évaporateur FTₙ₋₁ par un conduit 16 et alimente en vapeur de détente par un conduit 17 le réchauffeur Hₙ.

Le milieu aqueux refroidi par détente est ensuite dirigé, par le conduit 10, vers une section de séparation de liquide-solide F, dans laquelle on sépare la liqueur enceinte et les boues rouges. Ladite liqueur enceinte, dont la température est d'environ 75°C-80°C, débarrassée des insolubles, passe ensuite par un conduit 15 dans une section de précipitation K du trihydroxyde d'aluminium Al(OH)₃ (ultérieurement transformé en alumine Al₂O₃ par calcination).

La précipitation de Al(OH)₃ en K est suivie d'une séparation liquide-solide qui donne, outre le trihydroxyde d'aluminium, la liqueur décomposée. Cette liqueur décomposée, destinée à être recyclée à l'attaque de la bauxite, doit être préalablement reconcentrée en soude active par évaporation d'eau et portée à une température toujours plus élevée que celle pratiquée lors de l'attaque du minerai de bauxite afin de ne pas perturber les conditions physiques et chimiques du milieu d'attaque. Ainsi, la liqueur décomposée passe de la précipitation-séparation en K dans un premier réchauffeur Hₙ par un conduit 18.

La liqueur décomposée circule alors du réchauffeur Hₙ vers le réchauffeur Hₙ₋₁ par un conduit 19, et ainsi de suite en série, du réchauffeur H₃ vers le réchauffeur H₂ par un conduit 21, puis du réchauffeur H₂ vers un réchauffeur H₁ par un conduit 22. Chaque réchauffeur H est alimenté en vapeur par le détendeur-évaporateur FT qui lui est directement associé. A la sortie du réchauffeur H₁ la température de la liqueur destinée à l'attaque est d'environ 120°C. Ainsi, la liqueur décomposée à régénérer est passée d'étage de réchauffage en étage de réchauffage d'environ 80°C à environ 120°C, mais sa température est encore insuffisante pour que cette liqueur forme la liqueur d'attaque.

Parce que la bauxite introduite en B n'est pas à une température suffisante, la température de la liqueur d'attaque doit être portée d'environ 120°C à environ 156°C pour que la température du milieu d'attaque formé par le mélange de la bauxite et de la liqueur d'attaque soit à environ 145° C au moment de l'attaque proprement dite. Pour ce faire, on utilise au moins un réchauffeur tubulaire H₀ relié par un conduit 23 (voir figure 3) au réchauffeur H₁ et connecté à la source de vapeur vive par un conduit 24. Du réchauffeur H₀, la liqueur destinée à l'attaque va alimenter par le conduit 3 la zone de mélange B, qui à son tour alimente par le conduit 7 le réacteur d'attaque (D). Le cycle d'attaque est ainsi bouclé et l'installation de production d'alumine fonctionne en continu.

Selon l'invention (figures 4), on intègre dans l'installation d'attaque précitée du procédé Bayer, une nouvelle section de réchauffage et d'évaporation simultanés FFES du milieu aqueux destiné à l'attaque. On réalise ainsi une dérivation entre les réchauffeurs H₁ et H₀. et entre le réchauffeur H₀ et la zone de mélange (B). Du réchauffeur H₁, la liqueur décomposée passe par un conduit 26 vers la section FFES (et ne passe plus par le conduit 23 de l'état de la technique selon la figure 3). Un conduit 27 fait passer le milieu aqueux destiné à l'attaque, de la section de réchauffage et d'évaporation simultanés FFES vers le réchauffeur H₀ (qui est alimenté en vapeur vive par la canalisation 24). A la sortie du réchauffeur H₀ un conduit 28 amène le milieu aqueux destiné à l'attaque vers la section de réchauffage et d'évaporation simultanés FFES, Un conduit 29 sortant de la section FFES entraîne le milieu aqueux destiné à l'attaque, et ayant acquis une température et une concentration adéquates pour celle-ci, dans la zone de mélange (B) puis par le conduit 7 dans le réacteur d'attaque (D).

La section de réchauffage et d'évaporation simultanés FFES est alimentée en vapeur vive par un conduit 36. La vapeur générée dans la section de réchauffage et d'évaporation simultanés FFES par l'évaporation du milieu aqueux destiné à l'attaque est consommée in situ et l'excédent, quand il y en a, sort par un conduit 37 pour être utilisée dans au moins l'un des moyens précédemment cités.

Selon la figure 5, propre à l'invention, la section de réchauffage et d'évaporation simultanés est également intégrée dans l'installation d'attaque du procédé Bayer. On a ainsi réalisé une dérivation entre les réchauffeurs H₁ et H₀. Du réchauffeur H₁, la liqueur décomposée passe par un conduit 26 vers la section FFES. Un conduit 27 fait passer le milieu aqueux destiné à l'attaque, de la section de réchauffage et d'évaporation simultanés FFES vers le réchauffeur H₀ (alimenté en vapeur vive par la canalisation 24). A la sortie du réchauffeur H₀ (à la différence de la figure 4) un conduit 29 amène le milieu aqueux destiné à l'attaque et ayant acquis une température et une concentration optimales pour celle-ci, pour une partie dans la zone de mélange (B) et pour l'autre partie dans le réacteur d'attaque (D) tandis que la bouillie sortant de (B) y est amenée par le conduit (7).

Selon la figure 6, concernant l'invention, la section de réchauffage et d'évaporation simultanés est aussi intégrée dans l'installation d'attaque du procédé Bayer. Mais, à la différence des figures 4 et 5, on a réalisé une dérivation entre le réchauffeur H₀ et la zone de mélange (B). Du réchauffeur H₁, la liqueur décomposée passe par le conduit 23 vers le réchauffeur H₀ (qui est alimenté en vapeur vive par la canalisation 24). A la sortie du réchauffeur H₀, un conduit 28 amène le milieu aqueux destiné à l'attaque vers la section de réchauffage et d'évaporation simultanés FFES. Un conduit 29 sortant de la section FFES entraîne le milieu aqueux destiné à l'attaque, et ayant acquis une température et une concentration optimales pour celle-ci, dans la zone de mélange (B), puis dans le réacteur d'attaque (D).

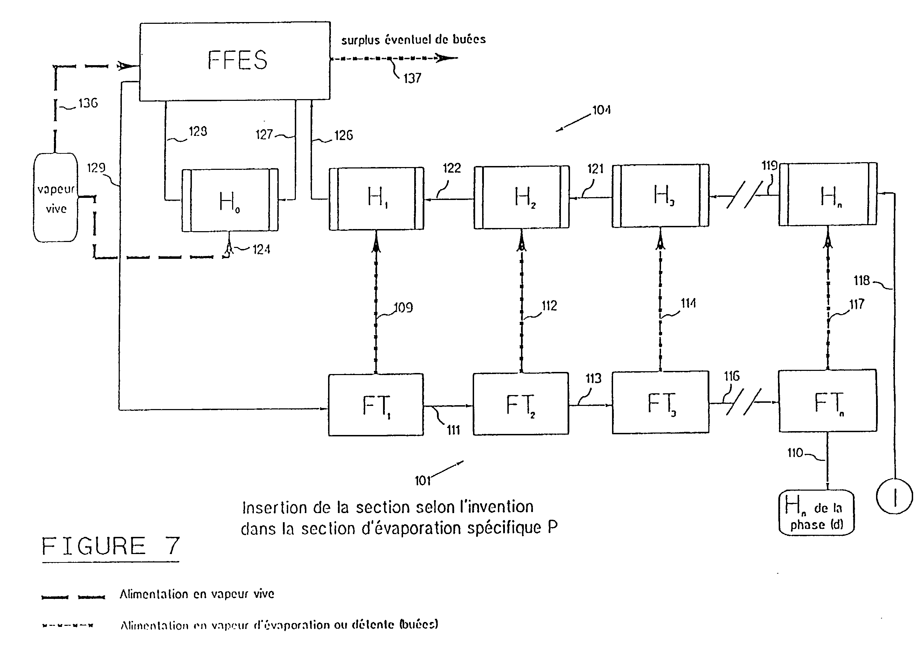

La figure 7, concernant l'invention, illustre le cas où la section de réchauffage et d'évaporation simultanés FFES est intégrée dans une section d'évaporation spécifique (P), présente dans une installation de production d'alumine conforme à la figure 3 de l'état de la technique.

Selon cette figure 7 qui concerne la phase (c) du procédé BAYER, la section d'évaporation spécifique (P) est munie d'une série (104) de réchauffeurs étagés à température croissante (Hₙ à H₁), et d'une série (101) d'évaporateurs à détente étagée (FT₁ à Ftₙ).

La liqueur décomposée, provenant de la zone de précipitation de Al(OH)₃ et de séparation (I), entre par le conduit 118 dans le réchauffeur Hₙ de ladite section, et se réchauffe progressivement en passant du réchauffeur Hₙ au réchauffeur H₁ par les conduits 119, 121 et 122.

La section de réchauffage et d'évaporation simultanées selon l'invention est intégrée dans ce cas de figure illustrative en dérivation entre les réchauffeurs H₁ et H₀ d'une part et entre le réchauffeur H₀ et l'évaporateur par détente FT₁ d'autre part.

Du réchauffeur H₁, la liqueur décomposée passe par un conduit 126 vers la section FFES (et ne passe plus par le conduit 23 de l'état de la technique selon la figure 3). Un conduit 127 fait passer la liqueur décomposée de la section de réchauffage et d'évaporation simultanés FFES vers le réchauffeur H₀ (qui est alimenté en vapeur vive par la canalisation 124). A la sortie du réchauffeur H₀ un conduit 128 amène le milieu aqueux destiné à l'attaque vers la section de réchauffage et d'évaporation simultanés FFES. Un conduit 129 sortant de la section FFES entraîne la liqueur ayant acquis température et concentration optimales dans la série des évaporateurs à détente étagée.

Les évaporateurs successifs FT₁ à FTₙ, à détente étagée (connectés en série) produisent par détente de la liqueur provenant de la section FFES, de la vapeur (buées) servant à chauffer la série 104 des réchauffeurs tubulaires étagés H₁ à Hₙ. Ainsi, le cycle de détente s'effectue de proche en proche, la liqueur circulant de l'évaporateur FT₁ à l'évaporateur FTₙ en passant par les conduits 111, 113, 116 ...

La liqueur refroidie par détente étagée, sortant de FTₙ est réintroduite par le conduit 110 en amont du réchauffeur Hₙ de la phase (d) du procédé BAYER. Chaque réchauffeur H est alimenté en vapeur par l'évaporateur à détente FT qui lui est directement associé, le réchauffeur Hₒ étant alimenté en vapeur vive.

La section de réchauffage et d'évaporation simultanés FFES est alimentée en vapeur vive par un conduit 136 à partir de la source de vapeur vive. La vapeur générée dans la section de réchauffage et d'évaporation simultanés FFES par l'évaporation de la liqueur à réchauffer et évaporer, est consommée in situ dans ladite phase

Dans le cas d'un surplus éventuel de vapeur (buées) générée dans la section FFES, il est dirigée par le conduit 137 dans l'une au moins des zones de consommation de vapeur, telles que celles évoquées précédemment, concernant par exemple la phase (d) du procédé BAYER.

Les figures 8 à 15, ci-après décrites de la section de réchauffage et d'évaporation simultanées à un ou plusieurs étages concernent l'intégration de ladite section, aussi bien dans la phase (c) (section d'évaporation spécifique) que la phase (d) (section de digestion) du procédé BAYER : la description en a volontairement été limitée à la seule phase (d) dudit procédé, mais s'applique de la même manière à la phase (c) dudit procédé quand celle-ci est équipée d'une évaporation à détente étagée.

La figure 8, propre à l'invention, illustre le cas où la section de réchauffage et d'évaporation simultanés FFES comporte un seul étage (39) (c'est-à-dire un simple effet). Cet étage 39 est intercalé entre le réchauffeur H₀ et la zone de mélange (B) et comprend un réchauffeur-évaporateur simultané 54 qui fonctionne selon le principe du "film descendant".

La liqueur décomposée provenant du réchauffeur H₀ pénètre par le conduit 28 dans la partie supérieure dudit réchauffeur-évaporateur simultané 54.

Le réchauffeur-évaporateur simultané 54 comprend un échangeur vertical tubulaire à surface 56 et un séparateur liquide-vapeur 53. L'échangeur 56 comprend de nombreux tubes verticaux dont le diamètre nominal varie de 30 0 50 mm et d'une longueur généralement comprise entre environ 8 et 15 mètres. La liqueur décomposée, distribuée en tête au moyen d'un système approprié, et le mélange formé par ladite liqueur et les buées descend le long des parois des tubes. La liqueur se concentre par évaporation et sort par le bas des tubes puis s'écoule dans le séparateur liquide-vapeur 53. La vapeur (buées) provenant de la séparation liquide-vapeur en 53 sert pour partie à alimenter le réchauffeur tubulaire H₀ par le conduit 57, l'autre partie étant réinjectée par le conduit 59 dans la partie supérieure du réchauffeur-évaporateur simultané. L'enceinte chauffante de l'échangeur 56 est alimentée en vapeur de chauffage par l'unité de vapeur vive LS.

Le fond du séparateur liquide-vapeur 53 est muni du conduit 29 qui dirige la liqueur portée à ses niveaux de température et de concentration optimales pour l'attaque dans les zones de mélange (B) et d'attaque (D).

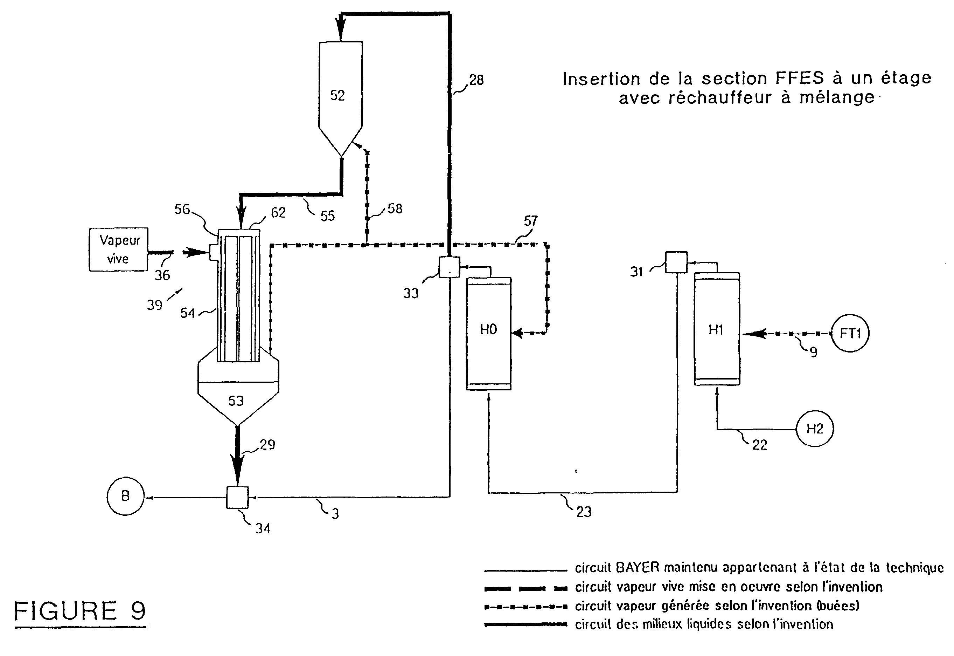

La figure 9, qui concerne l'invention, est une variante de la figure 8. Selon cette figure, la section de réchauffage et d'évaporation simultanés FFES comprend un seul étage 39 (simple effet). Cet étage est intercalé entre les réchauffeurs H₀ et la zone de mélange (B). L'étage de réchauffage et d'évaporation simultanés 39 comprend un réchauffeur-évaporateur simultané qui fonctionne selon le principe du "film descendant" et un réchauffeur-mélangeur (52) associé fonctionnant selon le principe du mélange liquide-vapeur. Ce type de réchauffeur-évaporateur simultané et son réchauffeur à mélange associé est décrit dans le brevet FR-A-361524 et repris ensuite dans le brevet FR-A-1419663 (ou encore dans la publication : «LIGHT METAL 1994, Proceedings of the technical sessions presented by the T.M.S. Light Metal Committee at the 123 Rd-TMS Annual Meeting, San Francisco ». ayant pour titre : « Evaporation techniques in the alumina industry »).

Ainsi, l'étage de réchauffage et d'évaporation simultanés 39 comprend un réchauffeur à mélange 52 et un réchauffeur-évaporateur simultané 54. La liqueur décomposée provenant du réchauffeur H₀ pénètre par le conduit 28 dans la partie supérieure du réchauffeur à mélange 52. De la vapeur, générée par le réchauffeur-évaporateur simultané 54 (par évaporation de la liqueur décomposée), est ainsi, au moins pour partie, injectée directement dans le réchauffeur à mélange 52 par un conduit 58, tandis que l'autre partie de cette vapeur circule par le conduit 57 pour alimenter le réchauffeur H₀. La liqueur décomposée portée ainsi par le réchauffeur à mélange 52 à sa température d'ébullition passe ensuite au moyen d'un conduit 55 dans le réchauffeur-évaporateur simultané 54.

Pour la suite de sa description, la figure 9 est conforme à la figure 6.

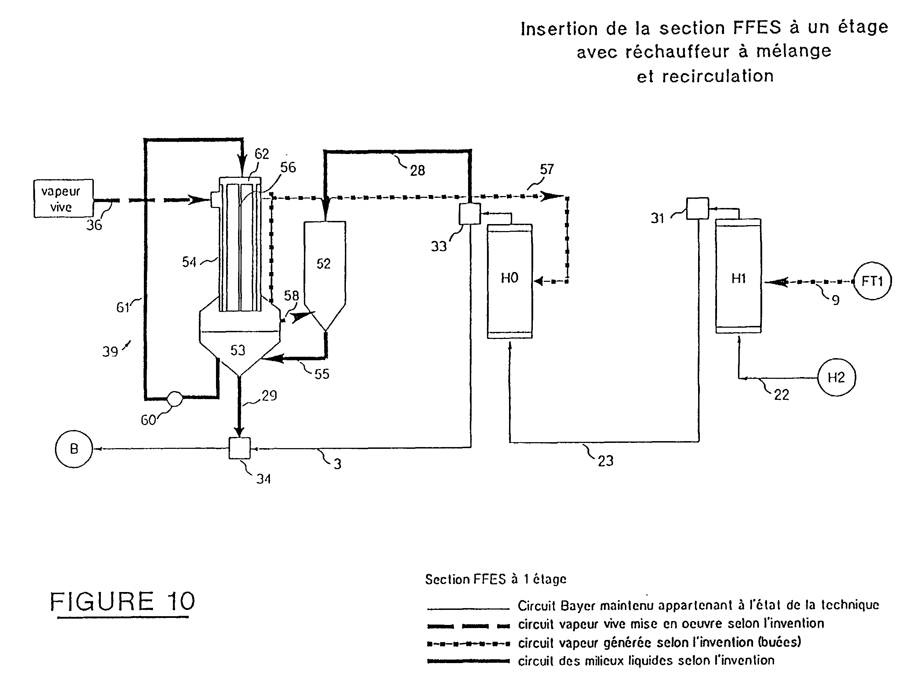

La figure 10, qui concerne l'invention, est également une variante des figures 6 et 8. Selon cette figure, la section de réchauffage et d'évaporation simultanés FFES comprend un étage 39. Cet étage est intercalé entre les réchauffeurs H₀ et la zone de mélange (B). L'étage de réchauffage et d'évaporation simultanés 39 utilisé comprend un réchauffeur-évaporateur simultané qui fonctionne selon le principe du "film descendant" et préférentiellement en son amont un réchauffeur-mélangeur (52) qui lui est associé, fonctionnant selon le principe du mélange liquide-vapeur.

La liqueur décomposée provenant du réchauffeur H₀ pénètre par le conduit 28 dans la partie supérieure du réchauffeur à mélange 52. De la vapeur, générée par le réchauffeur-évaporateur simultané 54 (par évaporation de la liqueur d'attaque), est ainsi, au moins pour partie, injectée directement dans le réchauffeur à mélange 52 par le conduit 58, tandis que l'autre partie de cette vapeur circule par le conduit 57 pour alimenter le réchauffeur H₀. La liqueur décomposée portée ainsi par le réchauffeur à mélange 52 à sa température d'ébullition passe ensuite au moyen d'un conduit 55 dans le réchauffeur-évaporateur simultané 54.

Le réchauffeur-évaporateur simultané 54 comprend un échangeur vertical tubulaire à surface 56 et un séparateur liquide-vapeur 53. A la différence des figures 8 et 9, la liqueur décomposée est recyclée à l'aide d'une pompe 60 (qui assure un débit constant) à partir du séparateur 53, passe par un conduit 61 et pénètre dans l'échangeur 56 par le haut au moyen d'un système de distribution 62. L'échangeur 56 est constitué de tubes verticaux comme précité. Le mélange constitué par la liqueur décomposée et les buées descend le long des parois des tubes, se concentre par évaporation et sort par le bas des tubes puis retourne dans le séparateur liquide-vapeur 53. La vapeur provenant de la séparation liquide-vapeur sert à alimenter le réchauffeur à mélange 52 par le conduit 58 et le réchauffeur tubulaire H₀.par le conduit 57. L'enceinte chauffante de l'échangeur 54 est alimentée en vapeur vive provenant de l'unité de production LS par le conduit 36.

Le fond du séparateur liquide-vapeur 53 est muni du conduit 29 qui dirige la liqueur d'attaque portée à température et concentration optimales dans la zone de mélange (B).

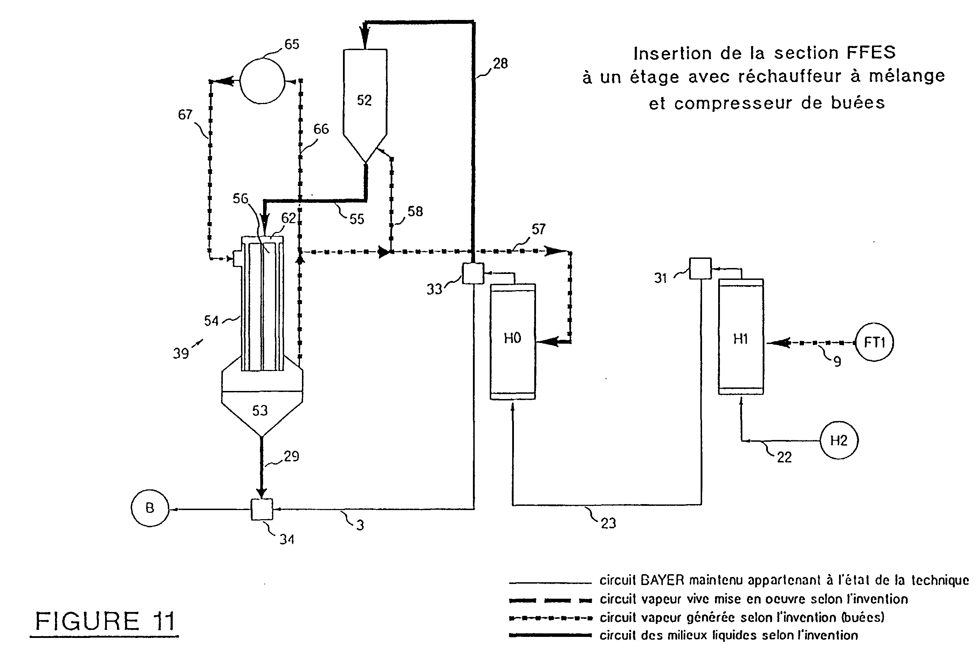

La figure 11, qui concerne l'invention, est aussi une variante des figures 8, 9 et 10, dans laquelle la section de réchauffage et d'évaporation simultanés FFES est munie d'un poste de compression 65 de la vapeur générée (buées) par l'étage de réchauffage et d'évaporation simultanés 39 dont le rôle est de comprimer les buées issues du séparateur 53 pour les porter à la pression de fonctionnement de 54. Ce poste de compression est alimenté par le conduit 66 prélevant une partie de la vapeur provenant du séparateur liquide-vapeur 53. A la sortie dudit poste de compression, la vapeur comprimée à la pression requise est utilisée pour chauffer l'échangeur 56 par le conduit 67.

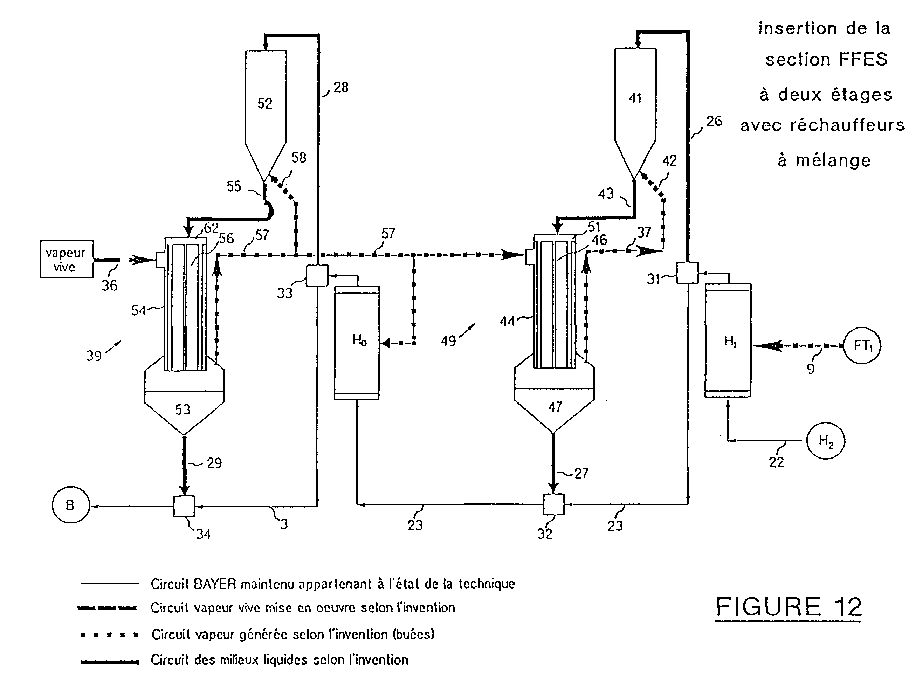

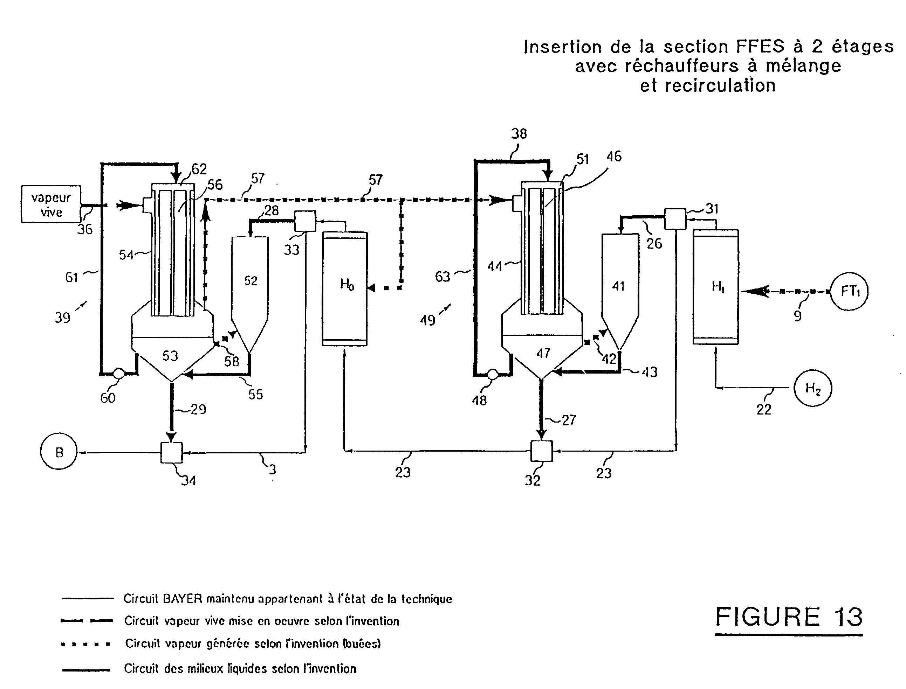

Selon les figures 12 et 13 qui illustrent l'invention, la section de réchauffage et d'évaporation simultanés FFES comprend deux étages 39 et 49 (double effet). L'un des étages 49 est intercalé entre les réchauffeurs H₁ et H₀. L'autre étage 39 est placé entre le réchauffeur H₀ et la zone de mélange (B). Les étages de réchauffage et d'évaporation simultanés 39 et 49 utilisés comprennent chacun un réchauffeur-évaporateur simultané qui fonctionne selon le principe du "film descendant" et un réchauffeur-mélangeur associé fonctionnant selon le principe du mélange liquide-vapeur.

L'étage de réchauffage et d'évaporation simultanés 49 comprend un réchauffeur à mélange 41 et un réchauffeur-évaporateur simultané 44. La liqueur décomposée provenant du réchauffeur H₁ pénètre par le conduit 26 dans la partie supérieure du réchauffeur à mélange 41. De la vapeur, générée par le réchauffeur-évaporateur simultané 44 (par évaporation de la liqueur décomposée), est injectée directement dans le réchauffeur à mélange 41 par un conduit 42. La liqueur décomposée portée ainsi par le réchauffeur à mélange 41 à sa température d'ébullition passe ensuite au moyen d'un conduit 43 dans le réchauffeur-évaporateur simultané 44.

Le réchauffeur-évaporateur simultané 44 comprend un échangeur vertical tubulaire à surface 46 et un séparateur liquide vapeur 47. L'échangeur 46 comprend un très grand nombre de tubes verticaux de caractéristiques telles que précitées. Le mélange de la liqueur décomposée et de buées descend le long des parois des tubes, se concentre et sort par le bas des tubes dans le séparateur liquide-vapeur 47. La vapeur provenant de la séparation liquide-vapeur sert à alimenter le réchauffeur à mélange 41 par le conduit 42. Quant à l'enceinte chauffante de l'échangeur 46, elle est alimentée en vapeur de chauffage par l'unité de réchauffage et d'évaporation simultanés 39 par le conduit 57.

Le fond du séparateur liquide-vapeur 47 est muni du conduit 27 qui dirige la liqueur décomposée en cours de régénération vers le réchauffeur tubulaire H₀. La liqueur sortant du réchauffeur H₀ pénètre ensuite par le conduit 28 dans l'autre étage de réchauffage et d'évaporation simultanés 39. Cet étage 39 comprend de manière tout à fait analogue à l'étage 49 un réchauffeur à mélange 52 couplé à un réchauffeur-évaporateur simultané 54. Le réchauffeur-évaporateur simultané 54, alimenté par le conduit 36 en vapeur vive, comprend un séparateur liquide-vapeur 53 et un échangeur tubulaire vertical à film descendant 56.

De la même manière, la vapeur produite par évaporation par le réchauffeur-évaporateur simultané 54 est séparée et est, pour partie, injectée directement dans le réchauffeur à mélange 52 par le conduit 58. L'autre partie de cette même vapeur circule par le conduit 57 et sert à alimenter en vapeur de chauffage l'échangeur tubulaire vertical 46 de l'unité de réchauffage et d'évaporation simultanés 49 placée en amont et l'échangeur tubulaire H₀.

La liqueur, qui est réchauffée et est concentrée aux niveaux optimaux pour l'attaque, constitue la liqueur d'attaque qui sort, par le conduit 29, de la section de réchauffage et d'évaporation simultanés FFES. Après avoir subi le procédé de recyclage selon l'invention, cette liqueur, prête pour l'attaque, peut retourner à l'étape de mélange (B) puis à l'étape d'attaque (D) de la bauxite et recommencer un nouveau cycle.

Dans le cas de la figure 13, la liqueur décomposée est recyclée à l'aide d'une pompe 48 qui assure un débit constant à partir du séparateur 47, passe par un conduit 63 et pénètre dans l'échangeur 46 par le haut au moyen d'un système de distribution 51.

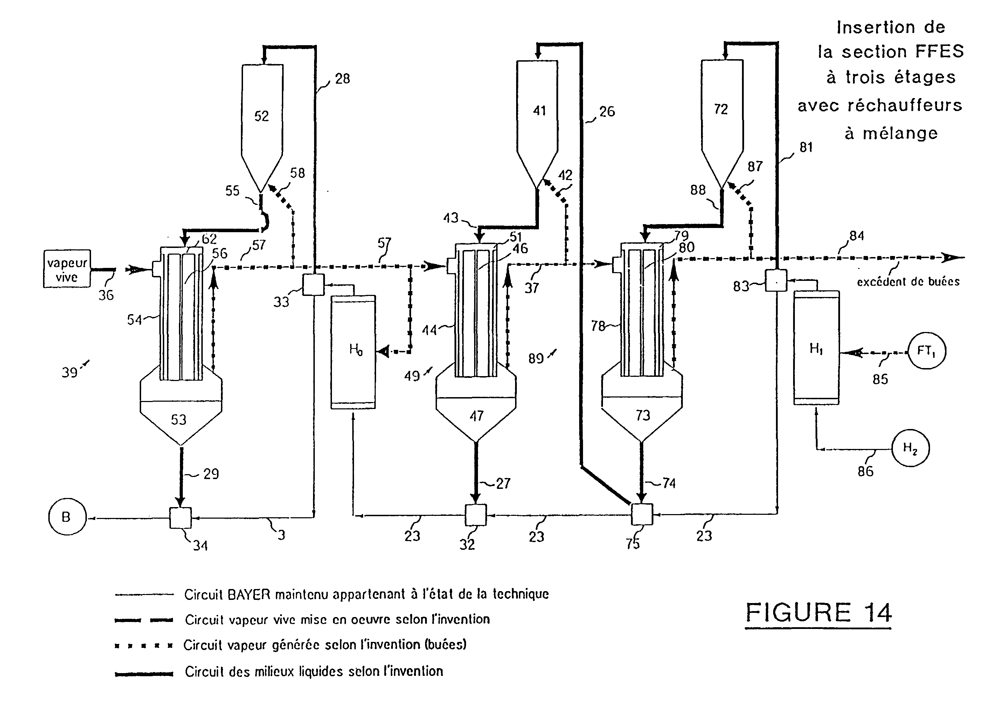

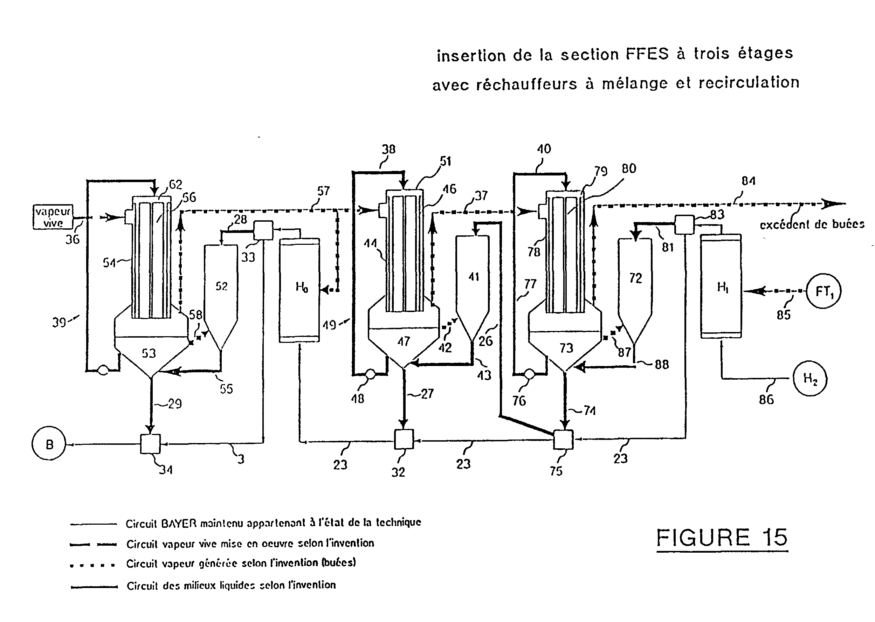

Selon les figures 14 et 15 qui illustrent l'invention, on intègre dans l'installation d'attaque précitée du procédé BAYER, une nouvelle section de réchauffage et d'évaporation simultanés FFES du milieu aqueux destiné à l'attaque qui comporte trois étages (triple effet).

Conformément à ce qui a été décrit précédemment dans le cas des figures 12 et 13, un étage 39 de réchauffage et d'évaporation simultanés alimenté en vapeur vive est implanté entre le réchauffeur H₀ et la zone de mélange (B). Les deux autres étages 49 et 89, montés en ligne, sont intégrés entre le réchauffeur H₁ (alimenté par FT₁ en vapeur de détente) et le réchauffeur H₀ (alimenté en vapeur de détente par l'étage 39).

Chaque étage de réchauffage et d'évaporation simultanés (39, 49, 89) comprend un réchauffeur-évaporateur simultané qui fonctionne selon le principe du film descendant et un réchauffeur-mélangeur (52, 41, 72) associé fonctionnant selon le principe du mélange liquide-vapeur (tous les moyens ont été décrits dans le cas des figures précédentes).

Le premier étage 39 de la section de réchauffage et d'évaporation simultanés selon l'invention est alimenté en vapeur vive par le conduit 36. La vapeur qu'il génère lui-même est envoyée, pour partie, dans le réchauffeur-mélangeur 52 et, pour les autres parties, dans le réchauffeur-évaporateur 44 (du deuxième étage 49) par le conduit 57, et dans le réchauffeur tubulaire H₀.

Le deuxième étage 49 de ladite section FFES selon l'invention, alimenté en vapeur par le premier étage, génère lui-même de la vapeur qui est envoyée, pour partie, dans son réchauffeur-mélangeur 41 par le conduit 42 et, pour l'autre partie, dans le réchauffeur-évaporateur 78 (du troisième étage 89) par le conduit 37.

Le troisième étage 89 de ladite section FFES selon l'invention, alimenté en vapeur par le deuxième étage, génère également de la vapeur qui est envoyée, pour partie, dans son réchauffeur-mélangeur 72 par le conduit 87 et, pour l'autre partie, par le conduit 84, dans l'une au moins des zones de consommation de vapeur, telles que précédemment évoquées.

La liqueur décomposée, en sortant de H₁, entre par le conduit 81 dans le réchauffeur-mélangeur 72 dans lequel elle est réchauffée par la vapeur arrivant par le conduit 87. Réchauffée, cette liqueur sortant du réchauffeur-mélangeur 72 par le conduit 88, entre dans l'échangeur-évaporateur simultané 78, dans lequel elle circule (figure 15) par la pompe 76 et le conduit 77, s'y concentre par évaporation-séparation (79, 80, 73) et en sort par le conduit 74, pour alimenter successivement les étages d'ordres 2 et 1, comme cela a été décrit dans le cas des figures précédentes.

En fin de cycle, la liqueur, réchauffée et concentrée dans les trois étages de la section selon l'invention de réchauffage et d'évaporation simultanés, constitue la liqueur d'attaque de la bauxite munie des paramètres de température et concentration initialement assignés par l'exploitant du procédé BAYER.

D'une manière générale, l'implantation de la section de réchauffage et d'évaporation simultanés selon l'invention dans le cycle de production de l'alumine d'après le procédé Bayer, présente l'extrême avantage, grâce à la présence des vannes telles que 75, 31, 32, 33, 34 qui sont disposées à l'interconnexion des conduits respectivement 23 et 74, 23 et 26, 23 et 27, 3 et 28, 3 et 29, de pouvoir déconnecter l'un ou l'autre des étages de la section de réchauffage et d'évaporation simultanés FFES de la chaîne de recyclage C et de repasser en mode de réchauffage habituel, par exemple pendant une opération de nettoyage.

En conséquence, il n'est jamais nécessaire d'investir dans un réchauffeur-évaporateur simultané de rechange comme cela est classique pour les réchauffeurs tubulaires.

### FONCTIONNEMENT DE L'INSTALLATION SELON L'INVENTION

Le procédé selon l'invention permet d'éviter complètement tous les inconvénients de l'art antérieur en modifiant le système d'échange entre la vapeur d'évaporation (buées) et le milieu aqueux destiné à l'attaque (liqueur décomposée transformée en liqueur d'attaque), qui doit être réchauffé et reconcentré en soude active. Ce milieu aqueux, selon la figure 13 par exemple, est introduit par le conduit 26 dans le réchauffeur à mélange 41, où il est réchauffé à l'aide d'une partie de la vapeur d'évaporation captée dans le séparateur liquide-vapeur 47. Le chauffage du milieu aqueux n'est plus effectué par contact avec les parois d'un échangeur, mais par injection directe de vapeur provenant du réchauffeur-évaporateur simultané 44 dans le réchauffeur à mélange 41 sans interposition de parois d'échange thermique. Le milieu aqueux à évaporer est chauffé jusqu'à sa température d'ébullition avant son entrée dans le faisceau tubulaire 46. L'incidence de ce réchauffage est importante et se traduit par une augmentation de l'efficacité thermique de la surface d'échange des évaporateurs-réchauffeurs.

Le milieu aqueux (destiné à l'attaque), ainsi réchauffé, peut ensuite passer par le réservoir 47, puis, par recyclage, dans le circuit du faisceau tubulaire 46 d'un échangeur-évaporateur simultané. Comme tout ce circuit est réalisé en continu, le niveau du réservoir 47 est maintenu constant par envoi du milieu aqueux simultanément vers le premier étage de réchauffage et d'évaporation simultanés et vers le faisceau tubulaire 46 du réchauffeur-évaporateur simultané 44, indépendamment de la charge de ce dernier.

En principe, tout type de réchauffeur-évaporateur simultané peut être utilisé mais en pratique on se sert de préférence d'un réchauffeur-évaporateur simultanés du type à film descendant. Dans ce dernier type de réchauffeur-évaporateur, il se produit une vaporisation d'eau du milieu aqueux à l'intérieur des tubes du faisceau qui commence dès son entrée dans ledit faisceau. La vapeur formée entraîne à vitesse croissante le milieu aqueux qui forme un film sur les parois internes des tubes du faisceau. Le système de distribution 51 fonctionne de telle sorte qu'il distribue un débit pratiquement constant à chaque tube. La conception du réchauffeur-évaporateur simultanés est telle que le film soit suffisamment fin pour obtenir un bon coefficient d'échange thermique et épais pour ne pas s'assécher au cours de la descente. Le milieu aqueux recyclé, réchauffé et concentré, s'écoule vers le réservoir 47 qui joue alors le rôle de séparateur liquide-vapeur.

La vapeur ainsi produite est mise en contact dans le réchauffeur à mélange 41 avec la liqueur décomposée provenant de l'étage précédent H₁. Le réchauffeur-évaporateur simultané fonctionne avec de la vapeur d'évaporation s'il s'agit d'un étage intermédiaire, ou de la vapeur vive provenant d'un générateur s'il s'agit d'un premier étage. La particularité du réchauffeur-évaporateur à film descendant est que les calories nécessaires du réchauffage et/ou à l'évaporation de la liqueur sont transmises par un seul et même appareil. On réalise ainsi, dans l'étage considéré, une concentration du milieu aqueux. La vapeur produite est envoyée à l'évaporateur de l'étage précédent pour permettre au réchauffeur-évaporateur de cet étage de jouer pleinement son rôle. On dispose dès lors d'un réchauffeur-évaporateur à multiple effet dans lequel la concentration du milieu aqueux recyclé croît d'un étage au suivant.

Grâce à ce principe, on peut réaliser une évaporation supplémentaire très importante par rapport aux capacités existantes, surtout si l'on tient compte que la capacité évaporatoire de la digestion est figée. De plus, le coefficient de transfert de chaleur d'un réchauffeur-évaporateur simultané, en particulier lorsqu'il est à film descendant, est très élevé (environ deux fois celui des réchauffeurs tubulaires). Cette particularité accroît encore l'intérêt économique de l'invention.

Le procédé et la chaîne de recyclage selon l'invention ne sont pas limités par les détails des modes de réalisation et des exemples choisis pour les illustrer. Des modifications peuvent être apportées sans pour autant sortir du cadre de l'invention. Cette dernière englobe par conséquent tous les moyens constituant des équivalents techniques des moyens décrits ainsi que leur combinaison.

### EXEMPLES COMPARATIFS DE REALISATION

### Exemple comparatif n° 1, conforme aux figures 6 et 8

Selon l'état de la technique, une installation classique de production d'alumine démunie d'une section d'évaporation spécifique (P) conforme à la figure 3, ayant une capacité de 500.000 T/an conforme à l'art antérieur (tableau 1, colonne 1) comporte :
- une section d'évaporateur-détendeur à étages FT, reliés entre eux, disposés en série dans lesquels circule le milieu aqueux provenant de l'attaque de la bauxite ;
- une section de réchauffeurs (H), reliés entre eux, disposés en série et dans lesquels circule la liqueur décomposée (milieu aqueux destiné à l'attaque) à contre-courant du milieu aqueux provenant de l'attaque, chaque détendeur (FT) étant connecté pour une circulation de vapeur (buées) avec chaque réchauffeur (H) qui lui correspond directement ;
- un réchauffeur H₀ connecté à une source de vapeur vive (LS), relié à l'entrée du mélangeur B [pour assurer la circulation du milieu aqueux destiné à l'attaque provenant de la sortie du réchauffeur H₁ de la série des réchauffeurs (H)] ;

La liqueur décomposée (provenant de la précipitation de Al(OH)₃ a :
. un débit de environ 1460 T/h à la sortie de H,
. une concentration de environ 130 g/l en Na₂O actif à l'entrée de H₁,
. une température de environ 120°C à la sortie de H₁,
. une température de environ 156°C à la sortie de H₀,
. enfin, une concentration de environ 130 g/l de Na₂O actif à la sortie de H₀.

Pour élever la température de la liqueur décomposée de 120°C (à la sortie de H₁) à 156°C (à la sortie de H₀), afin que le milieu d'attaque (formé par le mélange de ladite liqueur et de la bauxite réchauffée) soit au niveau de température recherché pour l'attaque de la bauxite (environ 145° C), la capacité évaporatoire de la zone de détente à étages est de 86,3 T/h et consomme 91,9 T/h de vapeur vive pour le fonctionnement de l'installation.

Dans la même installation classique de production d'alumine, mais munie d'une section d'évaporation spécifique (P) (conforme aux figures 2 et 3), ayant une capacité de 500.000 T/an conforme à l'art antérieur (tableau 1, colonne 2), et aux conditions précitées, l'élévation de la température de la liqueur décomposée de 120° C (à la sortie de H₁) à 156° C (à la sortie de H₀), pour que le milieu d'attaque formé par le mélange de ladite liqueur et de la bauxite réchauffée soit au niveau de température recherchée pour l'attaque de cette bauxite (environ 145° C), la capacité évaporatoire totale de l'installation est toujours de 86,3 T/h et consomme 91,9 T/h de vapeur vie pour le fonctionnement de ladite installation.

On assigne alors à l'installation industrielle du procédé BAYER de fonctionner à une concentration non plus de 130 g/l mais de 136 g/l en Na₂O actif pour la liqueur décomposée, en sortie de la section de réchauffage (tableau 1, colonne 3, ligne 6).

Selon l'état de la technique, pour faire passer, avec cette même installation de l'art antérieur, la concentration de la liqueur décomposée de 130 g/l à 136 g/l en Na₂O actif (Tableau 1, colonne 2) tout en maintenant la température de la liqueur à la sortie de H₀ à 156° C, la capacité évaporatoire totale de l'installation doit passer de 86,3 T/h à 141,9 T/h (ligne 9), ce qui exige, dans l'installation, une augmentation de la capacité évaporatoire de 55,6 T/h (colonne 3, ligne 10).

Pour atteindre cet objectif assigné, et accélérer l'attaque de la bauxite [et ce dans l'installation de l'état de la technique, munie d'une section d'évaporation spécifique (P)] (tableau 1, colonne 4), la capacité évaporatoire totale nécessaire de l'installation doit passer de 86,3 T/h à 141,9 T/h. Il faut donc augmenter la capacité évaporatoire de la section spécifique d'évaporation (P) de 55,6 T/h. Dès lors, la consommation totale en vapeur vive de l'installation augmente de 17 T/h en passant de 91,9 T/h à 108,9 T/h.

Ainsi, dans une installation de l'état de la technique, pour l'attaque de la bauxite selon le procédé BAYER, l'augmentation de la concentration en Na₂O actif de la liqueur d'attaque de 6 g/l entraîne une augmentation de la consommation en vapeur vive de 7 T/h, rendant économiquement inintéressante ladite augmentation de la concentration de la liqueur décomposée (ou liqueur destinée à l'attaque).

Selon l'invention, l'installation industrielle précitée a été équipée de la section de réchauffage et d'évaporation simultanés de la liqueur décomposée (FFES) comportant un seul étage. La comparaison chiffrée entre l'art antérieur (Tableau 1, Colonne 4) et l'objet de l'invention (Tableau 1, Colonne 5) montre que, en mettant en oeuvre le réchauffeur-évaporateur simultané (FFES), la température de la liqueur décomposée étant portée de 120°C (sortie H₁) à 156°C (sortie H₀), il a été possible d'atteindre l'objectif assigné de l'augmentation de la concentration de la liqueur décomposée de 130 g/l à 140 g/l du Na₂O actif. Pour y parvenir, la capacité évaporatoire totale de la zone de détente (E) (ligne 7) est passée de 86,6 T/h à 141,9 T/h, représentant une augmentation de cette capacité évaporatoire totale de 55,6 T/h par rapport à l'art antérieur (colonnes 1 et 2) pour une augmentation de consommation de vapeur vive de 0,5 T/h (92,4 T/h contre 91,9 T/h) (lignes 13, colonnes 1, 2, 4 et 5).

Ainsi, au moyen de l'invention, avec 0,5 T/h de vapeur vive supplémentaire par rapport à l'état de la technique, on augmente la capacité évaporatoire de l'installation de 55,6 T/h. Dès lors, l'objectif assigné de l'augmentation de la concentration en Na₂O actif de la liqueur décomposée destinée à l'attaque est atteint avec une très faible augmentation de la consommation en vapeur vive (0,5 T/h), alors que la même installation dépourvue de l'invention ne peut atteindre cet objectif que par une consommation de vapeur vive augmentée de 17 T/h.

L'intégration dans la section de réchauffage d'une installation de production d'alumine (selon l'art antérieur) d'une section de réchauffage-évaporation simultanés selon l'invention, conduit à régler simultanément la concentration en Na₂O actif de la liqueur décomposée destinée à l'attaque et la température de la liqueur au niveau le plus favorable pour la production de l'alumine et, dès lors, d'améliorer considérablement le rendement énergétique global du procédé Bayer avec un investissement faible, rapidement amortissable.

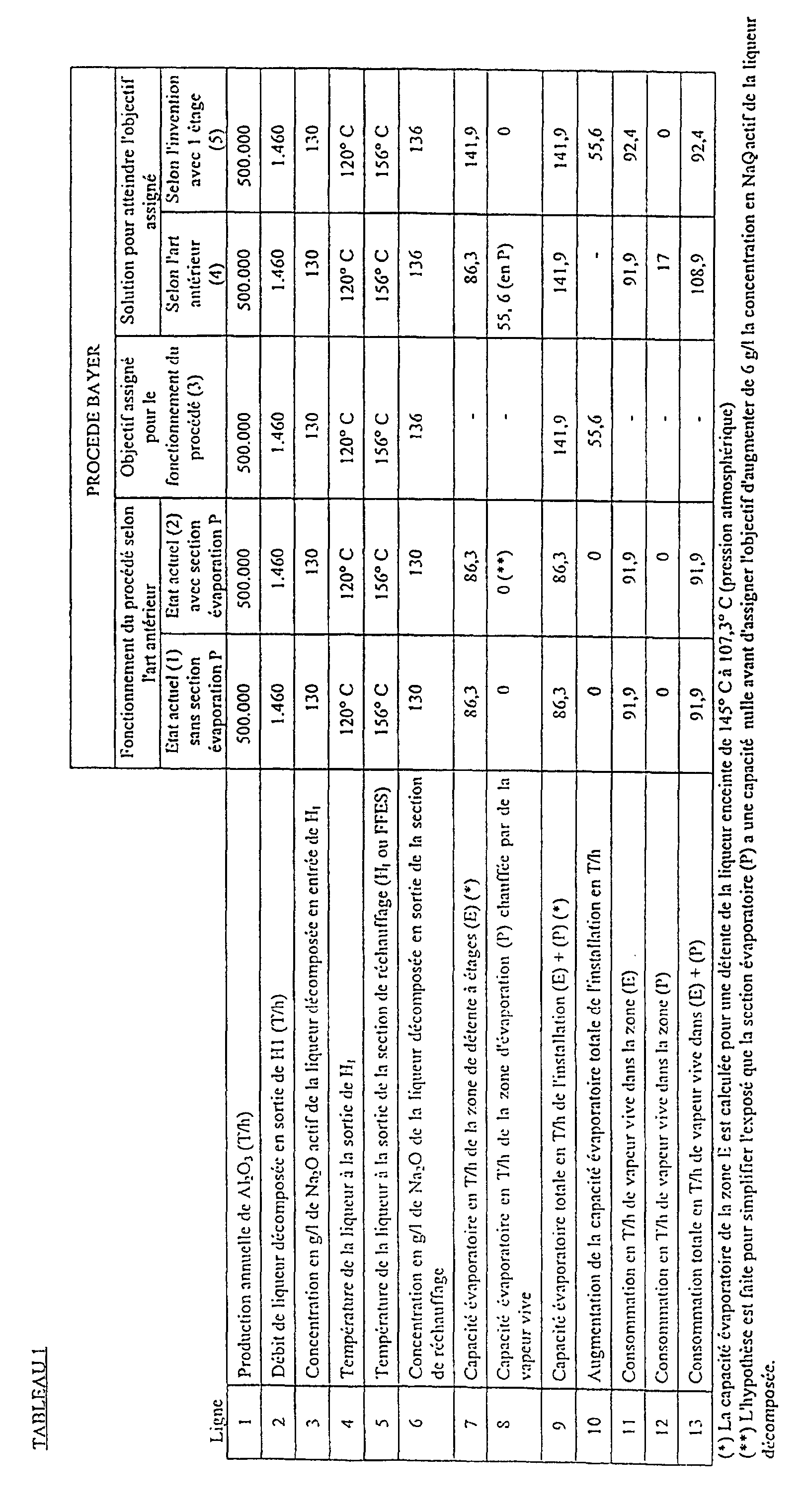

### Exemple comparatif n° 2, conforme aux figures 4 et 13

Selon l'état de la technique, une installation classique de production d'alumine démunie d'une section d'évaporation spécifique (P) (conforme aux figures 1 et 3), ayant une capacité de 500.000 T/an conforme à l'art antérieur (Tableau 2, Colonne 1) comporte :
- une section d'évaporateur-détendeur à étages FT, reliés entre eux, disposés en série dans lesquels circule le milieu aqueux provenant de l'attaque de la bauxite ;
- une section de réchauffeurs (H) reliés entre eux, disposés en série et dans lesquels circule la liqueur décomposée (milieu aqueux destiné à l'attaque) à contre-courant du milieu aqueux provenant de l'attaque, chaque détendeur (FT) étant connecté pour une circulation de vapeur avec chaque réchauffeur (H) qui lui correspond directement ;
- un réchauffeur H₀ connecté à une source de vapeur vive (LS), relié à l'entrée du mélangeur M [pour assurer la circulation du milieu aqueux destiné à l'attaque provenant de la sortie du réchauffeur H₁ de la série des réchauffeurs (H)] ;

La liqueur décomposée (provenant de la précipitation de Al(OH)₃ a :
. un débit de environ 1460 T/h à la sortie de H,
. une concentration de environ 130 g/l en Na₂O actif à l'entrée de H₁,
. une température de environ 120°C à la sortie de H₁,
. une température de environ 156°C à la sortie de H₀,
. enfin, une concentration de environ 130 g/l en Na₂O actif à la sortie de H₀.

Pour élever la température de la liqueur décomposée de 120°C (à la sortie de H₁) à 156°C (à la sortie de H₀), afin que le milieu d'attaque (formé par le mélange de ladite liqueur et de la bauxite réchauffée) soit au niveau de température recherché pour l'attaque de la bauxite (environ 145° C), la capacité évaporatoire de la zone de détente à étages est de 86,3 T/h et consomme 91,9 T/h de vapeur vive pour le fonctionnement de l'installation.

Dans la même installation classique de production d'alumine, mais munie d'une section d'évaporation spécifique (P) (conforme aux figures 2 et 3), ayant une capacité de 500.000 T/an conforme à l'art antérieur (tableau 2, colonne 2), et aux conditions précitées, l'élévation de la température de la liqueur décomposée de 120° C (à la sortie de H₁) à 156° C (à la sortie de H₀), pour que le milieu d'attaque formé par le mélange de ladite liqueur et de la bauxite réchauffée soit au niveau de température recherchée pour l'attaque de cette bauxite (environ 145° C), la capacité évaporatoire totale de l'installation est toujours de 86,3 T/h et consomme 91,9 T/h de vapeur vive pour le fonctionnement de ladite installation.

On assigne alors à l'installation industrielle du procédé BAYER de fonctionner à une concentration non plus de 130 g/l mais de 140 g/l en Na₂O actif pour la liqueur décomposée, en sortie de la section de réchauffage (tableau 2, colonne 3, ligne 6).

Pour faire passer, avec cette même installation de l'art antérieur, la concentration de la liqueur décomposée de 130 g/l à 140 g/l en Na₂O actif (Tableau 2, colonne 2) tout en maintenant la température de la liqueur à la sortie de H₀ à 156°C, la capacité évaporatoire totale de l'installation doit passer de 86,3 T/h à 170,3 T/h (ligne 9), ce qui exige, dans l'installation, une augmentation de la capacité évaporatoire totale de 84 T/h (colonne 3, ligne 10).

Pour atteindre cet objectif assigné, c'est-à-dire augmenter la concentration de la liqueur décomposée de 130 g/l à 140 g/l en Na₂O actif pour accélérer l'attaque de la bauxite [et ce dans l'installation de l'état de la technique, munie d'une section d'évaporation spécifique (P)] (tableau 2, colonne 4), la capacité évaporatoire totale nécessaire doit passer de 86,3 T/h à 170,3 T/h. Il faut donc augmenter la capacité évaporatoire de la section spécifique d'évaporation (P) de 84 T/h. Dès lors, la consommation totale en vapeur vive de l'installation augmente de 28 T/h en passant de 91,9 T/h à 119,9 T/h.

Ainsi, l'augmentation de la concentration en Na₂O actif de la liqueur d'attaque de 10 g/l, dans une installation d'attaque de la bauxite selon le procédé BAYER, entraîne une augmentation de la consommation en vapeur vive de 28 T/h, rendant économiquement inintéressante ladite augmentation de la concentration de la liqueur décomposée (ou liqueur destinée à l'attaque).

Selon l'invention, l'installation industrielle précitée a été équipée de la section de réchauffage et d'évaporation simultanés de la liqueur décomposée (FFES) comportant deux étages. La comparaison chiffrée entre l'art antérieur (Tableau 2, Colonne 4) et l'objet de l'invention (Tableau 2, Colonne 5) montre que, en mettant en oeuvre le réchauffeur-évaporateur simultané (FFES) selon l'invention, la température de la liqueur décomposée étant portée de 120°C (sortie H₁) à 156°C (sortie H₀), il a été possible d'atteindre l'objectif assigné de l'augmentation de la concentration de la liqueur décomposée de 130 g/l à 140 g/l du Na₂O actif sans augmentation sensible de la consommation de vapeur vive. Pour ce faire, la capacité évaporatoire totale de la zone de détente à étages E (ligne 7) a été passée de 86,6 T/h à 170,3 T/h, représentant une augmentation de cette capacité évaporatoire totale de 84 T/h par rapport à l'art antérieur (colonnes 1 et 2) pour une augmentation de consommation de vapeur vive de seulement 1 T/h (92,9 T/h contre 91,9 T/h) (lignes 13, colonnes 1, 2, 4 et 5).

Ainsi au moyen de l'invention, avec 1 T/h de vapeur vive consommée en supplément par rapport à l'état de la technique, la capacité évaporatoire de l'installation a pu être augmentée de 84 T/h. Dès lors, l'objectif assigné de l'augmentation de la concentration en Na₂O actif de la liqueur décomposée destinée à l'attaque est atteint avec une très légère augmentation de la consommation de vapeur vive (1 T/h), alors que la même installation dépourvue de l'invention ne peut atteindre l'objectif assigné que par une consommation de vapeur vive augmentée de 28 T/h.

L'intégration dans la section de réchauffage d'une installation de production d'alumine (selon l'art antérieur) d'une section de réchauffage-évaporation simultanés selon l'invention, conduit à régler simultanément la concentration en Na₂O actif de la liqueur décomposée destinée à l'attaque et la température de la liqueur au niveau le plus favorable pour la production de l'alumine et, dès lors, d'améliorer considérablement le rendement énergétique global du procédé Bayer avec un investissement faible, amortissable sur un temps court.

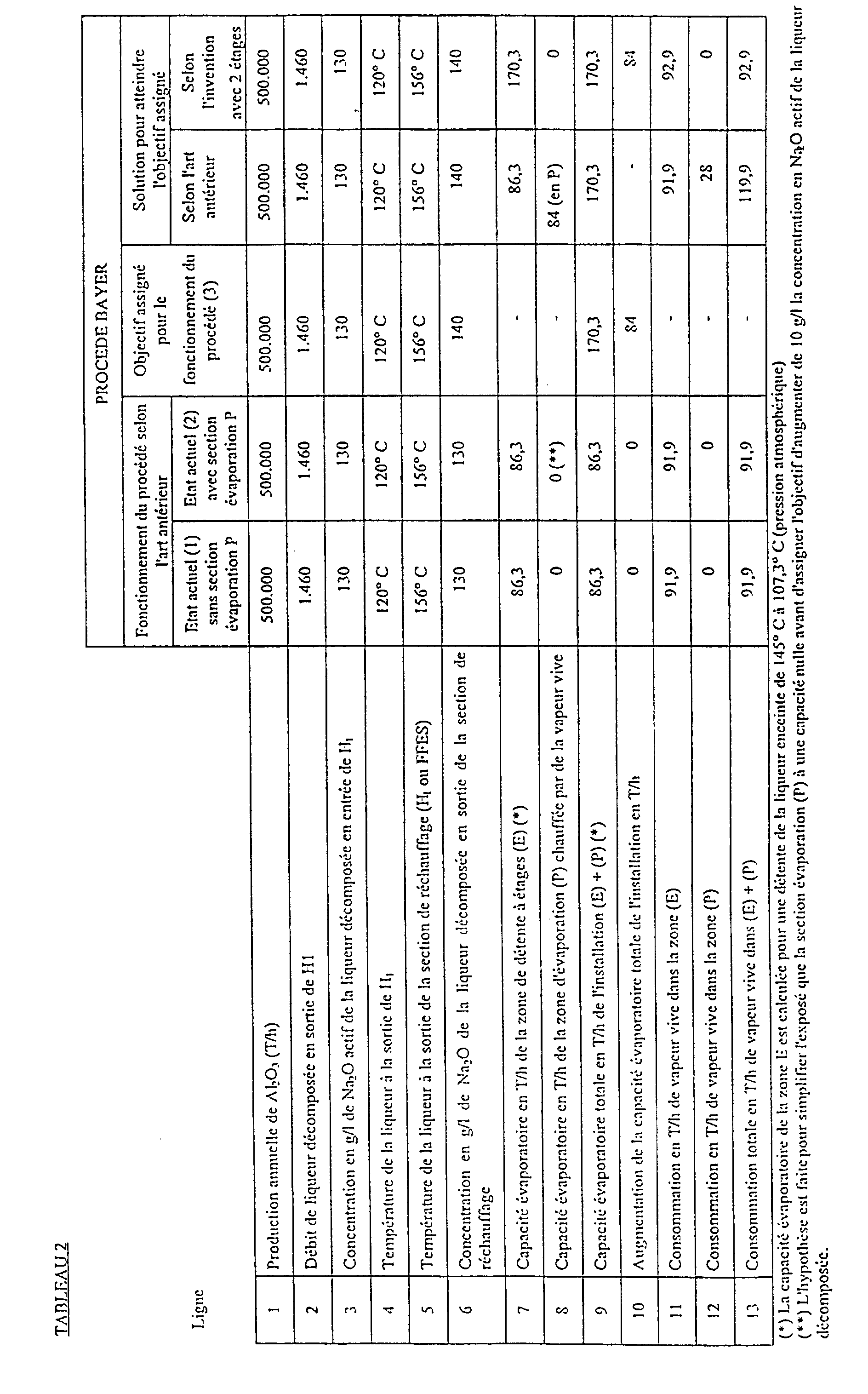

### Exemple comparatif n° 3, conforme aux figures 4 et 15

Selon l'état de la technique, une installation classique de production d'alumine démunie d'une section d'évaporation spécifique (P) (conforme aux figures 1 et 3), ayant une capacité de 500.000 T/an conforme à l'art antérieur (Tableau 3, Colonne 1) comporte :
- une section d'évaporateur-détendeur à étages FT, reliés entre eux, disposés en série dans lesquels circule le milieu aqueux provenant de l'attaque de la bauxite ;
- une section de réchauffeurs (H) reliés entre eux, disposés en série et dans lesquels circule la liqueur décomposée (milieu aqueux destiné à l'attaque) à contre-courant du milieu aqueux provenant de l'attaque, chaque détendeur (FT) étant connecté pour une circulation de vapeur avec chaque réchauffeur (H) qui lui correspond directement ;
- un réchauffeur H₀ connecté à une source de vapeur vive (LS), relié à l'entrée du mélangeur M [pour assurer la circulation du milieu aqueux destiné à l'attaque provenant de la sortie du réchauffeur H₁ de la série des réchauffeurs (H)] ;

La liqueur décomposée (provenant de la précipitation de Al(OH)₃ a :
. un débit de environ 1460 T/h à la sortie de H,
. une concentration de environ 130 g/l en Na₂O actif à l'entrée de H₁,
. une température de environ 120°C à la sortie de H₁,
. une température de environ 156°C à la sortie de H₀,
. enfin, une concentration de environ 130 g/l de Na₂O actif à la sortie de H₀.

Pour élever la température de la liqueur décomposée de 120°C (à la sortie de H₁) à 156°C (à la sortie de H₀), afin que le milieu d'attaque (formé par le mélange de ladite liqueur et de la bauxite réchauffée) soit au niveau de température recherché pour l'attaque de la bauxite (environ 145° C), la capacité évaporatoire de la zone de détente à étages est de 86,3 T/h et consomme 91,9 T/h de vapeur vive pour le fonctionnement de l'installation.

Dans la même installation classique de production d'alumine, mais munie d'une section d'évaporation spécifique (P) (conforme aux figures 2 et 3), ayant une capacité de 500.000 T/an conforme à l'art antérieur (tableau 1, colonne 2), et aux conditions précitées, l'élévation de la température de la liqueur décomposée de 120° C (à la sortie de H₁) à 156° C (à la sortie de H₀), pour que le milieu d'attaque formé par le mélange de ladite liqueur et de la bauxite réchauffée soit au niveau de température recherchée pour l'attaque de cette bauxite (environ 145° C), la capacité évaporatoire totale de l'installation est toujours de 86,3 T/h et consomme 91,9 T/h de vapeur vie pour le fonctionnement de ladite installation.

On assigne alors à l'installation industrielle du procédé BAYER de fonctionner à une concentration non plus de 130 g/l mais de 145 g/l en Na₂O actif pour la liqueur décomposée, en sortie de la section de réchauffage (tableau 3, colonne 3, ligne 6).

Pour faire passer, avec cette même installation de l'art antérieur, la concentration de la liqueur décomposée de 130 g/l à 145 g/l en Na₂O actif (Tableau 3, colonne 2) tout en maintenant la température de la liqueur à la sortie de H₀ à 156° C, la capacité évaporatoire totale de l'installation doit passer de 86,3 T/h à 211,3 T/h (ligne 9), ce qui exige, dans l'installation, une augmentation de la capacité évaporatoire totale de 125 T/h (colonne 3, ligne 10).

Pour atteindre cet objectif assigné, accélérer l'attaque de la bauxite et augmenter les rendements de production en Al₂O₃ [et ce dans l'installation de l'état de la technique, munie d'une section d'évaporation spécifique (P)] (tableau 3, colonne 4), la capacité évaporatoire totale nécessaire de l'installation doit passer de 86,3 T/h à 211,3 T/h. Il faut donc augmenter la capacité évaporatoire de la section spécifique d'évaporation (P) de 125 T/h. Dès lors, la consommation totale en vapeur vive de l'installation augmente de 42 T/h en passant de 91,9 T/h à 133,9 T/h.

Ainsi, dans une installation de l'état de la technique, de l'attaque de la bauxite selon le procédé BAYER, l'augmentation de la concentration en Na₂O actif de la liqueur d'attaque de 15 g/l entraîne une augmentation de la consommation en vapeur vive de 42 T/h, rendant économiquement inintéressante l'augmentation de la concentration de la liqueur décomposée (ou liqueur destinée à l'attaque).

Selon l'invention, l'installation industrielle précitée a été équipée de la section de réchauffage et d'évaporation simultanés de la liqueur décomposée (FFES) comportant trois étages. La comparaison chiffrée entre l'art antérieur (tableau 3, colonne 4) et l'objet de l'invention (tableau 3, colonne 5) montre que, en mettant en oeuvre le réchauffeur-évaporateur simultané (FFES) selon l'invention, la température de la liqueur décomposée étant portée de 120°C (sortie H₁) à 156°C (sortie H₀), il a été possible d'atteindre l'objectif assigné de l'augmentation de la concentration de la liqueur décomposée de 130 g/l à 145 g/l du Na₂O actif. Pour cela, la capacité évaporatoire totale de la zone de détente E (ligne 7) qui passe de 86,3 T/h à 211,3 T/h, représentant une augmentation de la capacité évaporatoire totale de 125 T/h par rapport à l'art antérieur (colonnes 1 et 2) pour une augmentation de consommation de vapeur vive de 11,4 T/h. Ainsi, avec près de 4 fois moins de vapeur vive, il a été possible de générer 125 T/h d'évaporation tout en disposant d'environ 10 T/h de vapeur à 2,4 bars absolus, susceptible de générer dans la section d'évaporation spécifique P des économies de vapeur vive pouvant représenter 20 % à 40 % de la vapeur vive totale initialement consommée, selon la configuration exacte de la section d'évaporation. Dans ce cas, l'installation ainsi équipée génère 10 T/h de vapeur (ligne 10) à 2,4 bars de pression absolue pour d'autres applications.

L'intégration dans la section de réchauffage d'une installation de production d'alumine (selon l'art antérieur) d'une section de réchauffage-évaporation simultanés selon l'invention, conduit à régler simultanément la concentration en Na₂O actif de la liqueur décomposée destinée à l'attaque et la température de la liqueur au niveau le plus favorable pour la production de l'alumine et, dès lors, d'améliorer considérablement le rendement énergétique global du procédé Bayer avec un investissement faible, amortissable sur un temps court.

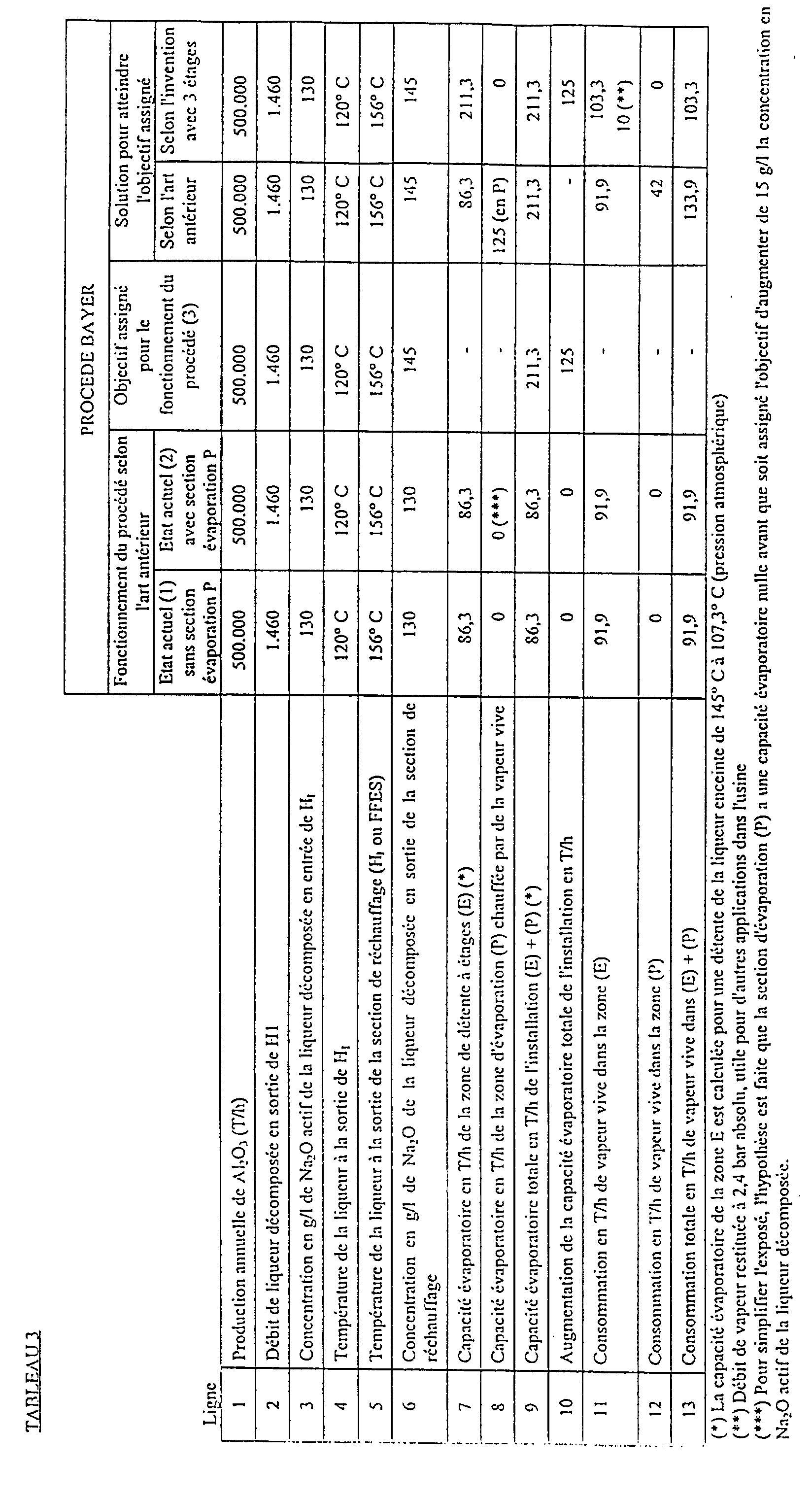

## Revendications

1. Procédé pour porter simultanément à une température et une concentration optimales un milieu aqueux destiné à l'attaque d'un minerai de bauxite dans une installation de production d'alumine selon le procédé Bayer, qui comprend les phases successives (a) à f), dans lesquelles :
a) on refroidit et évapore, dans une zone d'évaporation à détente étagée le milieu aqueux provenant de l'attaque contenant une liqueur enceinte ;
b) on sépare les stériles, précipite le trihydroxyde d'aluminium et récupère le milieu aqueux destiné à l'attaque, formé de la liqueur décomposée ;
c) éventuellement, on élimine par évaporation, dans une section d'évaporation spécifique, la quantité d'eau nécessaire et complémentaire à celle déjà évaporée dans la phase (a) ;
d) on réchauffe en plusieurs étages le milieu aqueux destiné à l'attaque ;
e) on utilise dans chacun des étages de la phase de réchauffage (d) la vapeur de détente générée à chacun des étages de la phase d'évaporation (a) ;
f) on réchauffe par de la vapeur vive le milieu aqueux destiné à l'attaque provenant de la phase de réchauffage (d) ;
**caractérisé en ce que** l'on réalise, en plus de toutes ces phases, une phase de réchauffage et d'évaporation simultanés du milieu aqueux destiné à l'attaque.

2. Procédé selon la revendication 1 **caractérisé en ce que** la phase de réchauffage et d'évaporation simultanés du milieu aqueux destiné à l'attaque est intégrée en un point quelconque de la phase (d) de réchauffage par étage.

3. Procédé selon la revendication 1, **caractérisé en ce que** la phase de réchauffage et d'évaporation simultanés du milieu aqueux destiné à l'attaque est intégrée en un point quelconque de la phase (c) d'évaporation spécifique quand ladite phase (c) est munie des mêmes moyens d'évaporation à détente étagée que la phase d'évaporation (a) et de réchauffage à plusieurs étages que la phase de réchauffage (d).

4. Procédé selon la revendication 1, **caractérisé en ce que** la phase de réchauffage et d'évaporation simultanés du milieu aqueux destiné à l'attaque est intégrée simultanément en un point quelconque des phases (d) et (c) de réchauffage par étage (H₀, H₁ à Hₙ) et d'évaporation spécifique, ladite phase (c) étant munie des mêmes moyens d'évaporation à détente étagée (FT₁ à FTₙ) et de réchauffage étagé (H₀, H₁ à Hₙ) que les phases (a) et (d).

5. Procédé selon l'une quelconque des revendications 1 à 4, **caractérisé en ce que** la phase de réchauffage et d'évaporation simultanés du milieu aqueux destiné à l'attaque reçoit le milieu aqueux à réchauffer et/ou à évaporer de l'étage de réchauffage alimenté en vapeur vive (H₀) de la phase (d) et délivre à la zone d'attaque la liqueur d'attaque portée à température et/ou concentration optimales.

6. Procédé selon l'une quelconque des revendications 1 à 4, **caractérisé en ce que** la phase de réchauffage et d'évaporation simultanés du milieu aqueux destiné à l'attaque reçoit le milieu aqueux à réchauffer et/ou évaporer de l'étage de réchauffage alimenté en vapeur vive H₀ de la phase (c) et délivre la liqueur réchauffée et/ou concentrée au réchauffeur de rang «n» de la phase de réchauffage (d).

7. Procédé selon l'une quelconque des revendications 1 à 4, **caractérisé en ce que** la phase de réchauffage et d'évaporation simultanés du milieu aqueux destiné à l'attaque reçoit le milieu aqueux à réchauffer et évaporer du premier étage de réchauffage alimenté en vapeur de détente (H₁) des phases (d) et/ou (c) et délivre à l'étage de réchauffage alimenté en vapeur vive (H₀) des phases (d) et/ou (c) ledit milieu aqueux qui y est réchauffé et/ou concentré.

8. Procédé selon l'une des revendications 1 à 4, **caractérisé en ce que** la phase de réchauffage et d'évaporation simultanés du milieu aqueux destiné à l'attaque :
- reçoit le milieu aqueux à réchauffer et/ou évaporer du premier étage de réchauffage alimenté en vapeur de détente (H₁) des phases (d) et/ou (c) ;
- délivre ledit milieu aqueux à l'étage de réchauffage alimenté en vapeur vive (H₀) des phases (d) et/ou (c), où il est porté à plus haute température ;
- reçoit ledit milieu aqueux de l'étage de réchauffage alimenté en vapeur vive (H0) ;
- et délivre la liqueur réchauffée et/ou concentrée, dans le cas de la phase (d) à la zone d'attaque, et, dans le cas de la phase (c), au réchauffeur de rang « n » de la phase (d).

9. Procédé selon l'une quelconque des revendications 1 à 4, **caractérisé en ce que**, dans le cas où la section d'évaporation spécifique (P) de la phase (c) comporte un multiple effet, la phase de réchauffage et d'évaporation simultanée est intégrée dans la phase (d).

10. Procédé selon l'une quelconque des revendications 1 à 9, **caractérisé en ce que** la phase de réchauffage et d'évaporation simultanés du milieu aqueux destiné à l'attaque est alimentée en vapeur vive et **en ce que** la vapeur (buées) qu'elle produit est consommée « in situ ».

11. Procédé selon l'une quelconque des revendications 1 à 8 et 10, **caractérisé en ce que** la vapeur produite dans la phase de réchauffage et d'évaporation simultanés est en outre consommée dans l'un au moins des étages H₀ et/ou H₁ à Hₙ de réchauffage des phases (d) et/ou (c) quand la phase (c) est munie des mêmes moyens d'évaporation à détente étagée que la phase (a) et de réchauffage à plusieurs étages que la phase de réchauffage (d).

12. Procédé selon les revendications 9 et 10, **caractérisé en ce que** la vapeur produite (buées) dans la phase de réchauffage et d'évaporation simultanés est en outre consommée dans l'un des effets multiples de la phase (c).

13. Procédé selon l'une quelconque des revendications 1 à 12, **caractérisé en ce que** la vapeur produite (buées) dans la phase de réchauffage et d'évaporation simultanés est en outre consommée dans au moins un réchauffeur tubulaire intégré à cet effet entre au moins deux des réchauffeurs de rang K et K-1 (K prenant la valeur 1 à n) des phases (d) et/ou (c).

14. Procédé selon l'une quelconque des revendications 1 à 13, **caractérisé en ce que** la vapeur produite (buées) dans la phase de réchauffage et d'évaporation, simultanée est en outre consommée pour réchauffer la liqueur décomposée servant à la préparation de la bouillie de bauxite et/ou pour produire de l'eau chaude à température élevée (80°C à 90°C).

15. Procédé selon l'une quelconque des revendications 1 à 14, **caractérisé en ce que** l'on réalise la phase de réchauffage et d'évaporation simultanés en utilisant au moins un étage de réchauffage et d'évaporation simultanés du milieu aqueux destiné à l'attaque, chaque étage se composant de un ou plusieurs moyens de réchauffage et d'évaporation simultanés fonctionnant en série ou en parallèle.

16. Procédé selon la revendication 15, **caractérisé en ce que** l'on réalise au moins deux étages, de réchauffage et d'évaporation simultanés du milieu aqueux destiné à l'attaque et **en ce que** l'on utilise la vapeur générée (buées) par l'un des étages de réchauffage et d'évaporation simultanés pour alimenter l'étage de réchauffage et d'évaporation simultanés qui le précède directement.

17. Procédé selon la revendication 15 ou 16, **caractérisé en ce que** l'on alimente en vapeur vive le premier étage de réchauffage et d'évaporation simultanés du milieu aqueux destinés à l'attaque.

18. Procédé selon l'une des revendications 15 à 17, **caractérisé en ce que** l'on place l'un des étages de réchauffage et d'évaporation simultanés du milieu aqueux destiné à l'attaque à la sortie des phases (d) et/ou (c) de réchauffage par de la vapeur vive et **en ce que** l'on place un autre desdits étages de réchauffage et d'évaporation simultanés du milieu aqueux destiné à l'attaque entre la sortie du premier des étages de réchauffage (H₁) des phases (d) et/ou (c) et l'entrée de la phase de réchauffage par de la vapeur vive (étage H₀).

19. Procédé selon l'une des revendications 15 à 17, **caractérisé en ce que** l'on place l'un des étages de réchauffage et d'évaporation simultanés du milieu aqueux destiné à l'attaque à la sortie des phases (d) et/ou (c) de réchauffage par la vapeur vive (étage H₀) et **en ce que** l'on place deux autres desdits étages de réchauffage et d'évaporation simultanés du milieu aqueux destiné à l'attaque entre la sortie du premier des étages de réchauffage (H₁) des phases (d) et/ou (c) et l'entrée de la phase de réchauffage par la vapeur vive (étage H₀).

20. Procédé selon l'une quelconque des revendications 1 à 19, **caractérisé en ce que** dans le ou les étages de réchauffage et d'évaporation simultanés, on utilise un film vertical descendant du milieu aqueux destiné à l'attaque, chauffé par de la vapeur, et **en ce que** ledit film génère de la vapeur in situ qui est ensuite séparée du liquide.

21. Procédé selon l'une quelconque des revendications 1 à 20, **caractérisé en ce que** l'on réalise un réchauffage du milieu aqueux destiné à l'attaque, par mélange direct dudit milieu aqueux avec de la vapeur.

22. Procédé selon la revendication 21, **caractérisé en ce que** l'on réalise le réchauffage du milieu aqueux destiné à l'attaque en au moins un étage de réchauffage par injection de vapeur, et **en ce que** l'on place ledit étage à l'entrée de la phase de réchauffage et d'évaporation simultanés.

23. Procédé selon la revendication 21, **caractérisé en ce que** l'on utilise, dans chacun des étages de réchauffage par mélange, la vapeur générée par chacun des étages de réchauffage et d'évaporation simultanés du milieu aqueux destiné à l'attaque.

24. Procédé selon l'une quelconque des revendications 1 à 23 **caractérisé en ce que** on comprime la vapeur produite (buées) dans l'un au moins des étages de la phase de réchauffage et d'évaporation simultanés pour la porter à la pression de fonctionnement de l'étage concerné.

25. Chaîne pour porter simultanément à température et concentration optimales selon les revendications 1 à 24 un milieu aqueux destiné à l'attaque d'un minerai de bauxite dans une installation de production d'alumine selon le procédé Bayer, comprenant :
- une section d'évaporateurs-détendeurs (FT) reliés entre eux, disposés en série et dans lesquels circule un milieu aqueux provenant de l'attaque d'une bauxite dans un réacteur d'attaque (D) ;
- une section de réchauffeurs (H) reliés entre eux, disposés en série et dans lesquels circule le milieu aqueux destiné à l'attaque, chaque détendeur (FT) étant respectivement connecté pour une circulation de vapeur avec chaque réchauffeur (H) qui lui correspond directement ;
- éventuellement, une section d'évaporation spécifique (P) pour éliminer la quantité d'eau nécessaire et complémentaire à celle éliminées dans la section d'évaporateur-détendeur (FT) ;
- au moins un réchauffeur (H₀) connecté à une source de vapeur vive relié à l'entrée d'un dispositif de mélange et/ou d'attaque de la bauxite par la liqueur d'attaque pour porter cette liqueur provenant de la sortie du premier réchauffeur (H₁) appartenant à la section de réchauffeurs (H) , à la température nécessaire à l'attaque ;
**caractérisée en ce que** l'on intègre, dans cette chaîne, une section de réchauffage et d'évaporation simultanés(FFES) du milieu aqueux destiné à l'attaque.

26. Chaîne selon la revendication 25, **caractérisée en ce que** la section de réchauffage et d'évaporation simultanés (FFES) est intégrée en un point quelconque de la section des réchauffeurs (H) constituant la phase (d) du procédé.

27. Chaîne selon la revendication 25, **caractérisée en ce que** la section de réchauffage et d'évaporation simultanés (FFES) est intégrée en un point quelconque de la section des réchauffeurs par étage (H) de la section d'évaporation (P).

28. Chaîne selon la revendication 25, **caractérisée en ce que** la section de réchauffage et d'évaporation simultanés (FFES) est intégrée simultanément en un point quelconque des réchauffeurs par étage (H) de la section des réchauffeurs (H) constituant la phase (d) du procédé et des réchauffeurs par étage (H) de la section spécifique d'évaporation (P).

29. Chaîne selon l'une quelconque des revendications 25 à 28, **caractérisée en ce que** la section de réchauffage et d'évaporation simultanés (FFES) est intégrée entre le réchauffeur Ho alimenté en vapeur vive, de la section des réchauffeurs à étage (H) de la phase (d) du procédé dont elle reçoit le milieu aqueux à traiter, et la zone d'attaque qu'elle alimente en milieu aqueux d'attaque portée à la température et/ou concentration optimales.

30. Chaîne selon l'une quelconque des revendications 25 à 28, **caractérisée en ce que** la section de réchauffage et d'évaporation simultanés (FFES) est intégrée entre le réchauffeur (H₀) alimenté en vapeur vive, de la section d'évaporation spécifique (P), dont il reçoit le milieu aqueux à traiter, et le réchauffeur (Hₙ) alimenté en vapeur de détente de la phase de réchauffage (d) du procédé, auquel elle délivre le milieu aqueux traité.

31. Chaîne selon l'une quelconque des revendications 25 à 28, **caractérisée en ce que** la section de réchauffage et d'évaporation simultanés (FFES) est intégrée entre le réchauffeur (H₁) alimenté en vapeur de détente dont elle reçoit le milieu aqueux à traiter, et le réchauffeur (H₀) alimenté en vapeur vive de la section des réchauffeurs (H) constituant la phase (d) du procédé et/ou de la section des réchauffeurs (H) de la section d'évaporation spécifique (P), auquel elle délivre le milieu aqueux traité.

32. Chaîne selon l'une quelconque des revendications 25 à 28, **caractérisée en ce que** la section de réchauffage et d'évaporation simultanés (FFES) est intégrée :
- selon un premier niveau entre le réchauffeur (H₁) alimenté en vapeur de détente dont elle reçoit le milieu aqueux à traiter et le réchauffeur (H₀) alimenté en vapeur vive auquel elle restitue le milieu aqueux traité ;
- selon un deuxième niveau, entre le réchauffeur (H₀) alimenté en vapeur vive dont elle reçoit le milieu aqueux porté à plus haute température et :
* soit la zone d'attaque de la bauxite à laquelle elle délivre le milieu aqueux réchauffé et/ou concentré de manière optimale pour l'attaque ;
* soit, dans le cas de la section d'évaporation spécifique (P) au réchauffeur de rang « n » de la phase (d) du procédé auquel elle restitue le milieu aqueux traité.

33. Chaîne selon l'une quelconque des revendications 25 à 28, **caractérisée en ce que** la section de réchauffage et d'évaporation simultanés (FFES) est alimentée en vapeur vive et produit de la vapeur (buées) consommée in situ.

34. Chaîne selon l'une quelconque des revendications 25 à 33, **caractérisée en ce que** la section de réchauffage et d'évaporation simultanés (FFES) est connectée pour l'utilisation de la vapeur produite (buées) :
- au réchauffeur (H₀) en combinant son alimentation en vapeur vive avec tout ou partie de la vapeur produite (buées) ;
- et/ou à l'un au moins des réchauffeurs par étage (H) de la section de réchauffage de la phase (d) du procédé et/ou de la section d'évaporation spécifique (P) de la phase (c) du procédé ;
- et/ou à un réchauffeur tubulaire spécialement intégré entre deux réchauffeurs des sections de réchauffage de la phase (d) et/ou de la section d'évaporation spécifique (P) de la phase (c) ;
- et/ou à l'un des effets du multiple effet de la section d'évaporation spécifique (P) de la phase (c) ;
- et/ou à des moyens appropriés pour produire de l'eau chaude et/ou réchauffer la liqueur décomposée servant à la préparation de la bouillie de bauxite.

35. Chaîne selon l'une quelconque des revendications 25 à 34, **caractérisée en ce que** la section de réchauffage et d'évaporation simultanés (FFES) comporte au moins un étage de réchauffage et d'évaporation simultanés du milieu aqueux destiné à l'attaque, chaque étage se composant de un ou plusieurs moyens de réchauffage et d'évaporation simultanés fonctionnant en série ou en parallèle.

36. Chaîne selon l'une quelconque des revendications 25 à 35, **caractérisée en ce que** la section de réchauffage et d'évaporation simultanés (FFES) comporte un seul étage (39) alimenté en vapeur vive et connecté pour le traitement de la vapeur produite (buées) au réchauffeur (H₀) en combinant son alimentation en vapeur vive avec tout ou partie des buées et/ou à son propre échangeur (54).

37. Chaîne selon l'une quelconque des revendications 25 à 36, **caractérisée en ce que** la section de réchauffage et d'évaporation simultanés (FFES) comporte deux étages de réchauffage et d'évaporation simultanés (39 et 49) dont le premier étage (39) est connecté pour le traitement de la vapeur produite (buées) au deuxième étage (49) et au réchauffeur (H₀).

38. Chaîne selon la revendication 37, **caractérisée en ce que** l'un des étages de la section de réchauffage et d'évaporation simultanés (49) est connecté en amont à la sortie du réchauffeur (H₁) de la série des réchauffeurs (H) et en aval à l'entrée du réchauffeur (H₀), et **en ce que** l'autre étage de la section de réchauffage et d'évaporation simultanés (39) est relié en amont à la sortie du réchauffeur (H₀) et en aval à la zone d'attaque quand la section de réchauffage et d'évaporation simultanés est implantée dans la phase (d) du procédé ou au réchauffeur (Hₙ) de la phase (d) quand la section de réchauffage et d'évaporation simultanés est implantée dans la phase (c) du procédé.

39. Chaîne selon l'une quelconque des revendications 25 à 38, **caractérisée en ce que** la section de réchauffage et d'évaporation simultanés (FFES) comporte trois étages, l'un des étages (39) étant connecté à la sortie du réchauffeur (H₀) (alimenté par de la vapeur vive) des phases (d) et/ou (c) du procédé, les autres étages (49, 89) en série étant connectés en amont à la sortie du réchauffeur (H₁) alimenté en vapeur de détente, et en aval à l'entrée du réchauffeur (H₀) des phases (d) et/ou (c) du procédé.

40. Chaîne selon l'une quelconque des revendications 25 à 39, **caractérisée en ce que** un étage de réchauffage et d'évaporation simultanés (39, 49, 89) comprend notamment un réchauffeur-évaporateur simultané à film descendant (54, 44, 78) lui même comprenant notamment un échangeur dont les tubes sont agencés verticalement (56, 46, 80), un système de distribution (62, 51, 79) et un séparateur liquide-vapeur (53, 47, 73).

41. Chaîne selon l'une quelconque des revendications 25 à 40, **caractérisée en ce que** un étage de réchauffage et d'évaporation simultanés (39, 49, 89) comprend également un réchauffeur (52, 41, 72) à mélange direct du milieu aqueux destiné à l'attaque avec de la vapeur.

42. Chaîne selon l'une quelconque des revendications 25 à 41, **caractérisée en ce que** le réchauffeur à mélange (52, 41, 72) est relié en aval, pour une circulation du milieu aqueux destiné à l'attaque à l'entrée du réchauffeur-évaporateur simultanés (54, 44, 78), et est alimenté en vapeur par ledit réchauffeur-évaporateur simultané (54, 44, 78).

43. Chaîne selon l'une quelconque des revendications 25 à 42, **caractérisée en ce que** au moins un étage de la section de réchauffage et d'évaporation simultanés est doté d'un poste de compression (65) pour comprimer la vapeur produite (buées) et la porter à la pression de fonctionnement de l'étage concerné.

44. Installation de production d'alumine selon le procédé Bayer, **caractérisée en ce qu'**elle comprend une chaîne pour porter simultanément à température et concentration optimales le milieu aqueux destiné à l'attaque d'un minerai de bauxite selon l'une des revendications 25 à 43.

## Claims

1. A process to bring simultaneously to optimum temperature and concentration an aqueous medium intended for attack of bauxite ore in a Bayer process alumina production unit, which includes successive phases a) to f), in which:
a) the aqueous medium coming from attack containing pregnant liquor is cooled and evaporated in a multiple stage flash evaporation zone;
b) the sterile residue is separated, the aluminium trihydroxide is precipitated and the aqueous medium intended for attack, formed from decomposed liquor, is recovered;
c) optionally, the required quantity of water, complementary to that already evaporated in phase a), is eliminated by evaporation in a specific evaporation section;
d) the aqueous medium intended for attack is heated in several stages ;
e) the flash vapour generated in each of the stages of the evaporation phase a) is used in each of the stages of the heating phase d);
f) the aqueous medium intended for attack coming from the heating phase d) is heated by live steam;
**characterised in that**, in addition to all these phases, a simultaneous heating and evaporation phase is carried out on the aqueous medium intended for attack.

2. A process according to claim 1 **characterised in that** the simultaneous heating and evaporation phase of the aqueous medium intended for attack is inserted at any one point in phase d) of staged heating.

3. A process according to claim 1, **characterised in that** the simultaneous heating and evaporation phase of the aqueous medium intended for attack is inserted at any one point in phase c) of specific evaporation when said phase c) is equipped with the same means of multiple stage flash evaporation as evaporation phase a) and the same means of multiple stage heating as heating phase d).

4. A process according to claim 1, **characterised in that** the simultaneous heating and evaporation phase of the aqueous medium intended for attack is inserted simultaneously at any point in phases d) and c), of stage heating (H₀, H₁ to Hₙ) and of specific evaporation, said phase c) being equipped with the same multiple stage flash evaporation means (FT₁ to FTₙ) and stage heating means (H₀, H₁ to Hₙ) as phases a) and d).

5. A process according to any one of claims 1 to 4, **characterised in that** the simultaneous heating and evaporation phase of the aqueous medium intended for attack receives the aqueous medium to be heated and/or evaporated from the heating stage fed with live steam (H₀) of phase d) and delivers attack liquor brought at the optimum temperature and concentration to the attack zone.

6. A process according to any one of claims 1 to 4, **characterised in that** the simultaneous heating and evaporation phase of the aqueous medium intended for attack receives the aqueous medium to be heated and/or evaporated from the heating stage fed with live steam (H₀) of phase c) and delivers the heated and/or concentrated liquor to the rank "n" heater of heating phase d).

7. A process according to any one of claims 1 to 4, **characterised in that** the simultaneous heating and evaporation phase of the aqueous medium intended for attack receives the aqueous medium to be heated and evaporated from the first stage of heating fed with flash vapour (H₁) of phases d) and/or c) and delivers said aqueous medium to the heating stage fed with live steam (H₀) of phases d) and/or c) where it is heated and/or concentrated.

8. A process according to any one of claims 1 to 4, **characterised in that** the simultaneous heating and evaporation phase of the aqueous medium intended for attack:
- receives the aqueous medium to be heated and/or evaporated from first heating stage fed with flash vapour (H₁) of phases d) and/or c);
- delivers said aqueous medium to the heating stage fed with live steam (H₀) of phases d) and/or c) where it is brought to a higher temperature;
- receives said aqueous medium from the heating stage fed with live steam (H₀);
- and delivers the heated and/or concentrated liquor, to the attack zone with regard to phase d), and, to the rank "n" heater of phase d) with regard to phase c).

9. A process according to any one of claims 1 to 4, **characterised in that**, in case where the specific evaporation section (P) of phase c) includes a multiple effect, the simultaneous heating and evaporation section is inserted in phase d).

10. A process according to any one of claims 1 to 9, **characterised in that** the simultaneous heating and evaporation phase of the aqueous medium intended for attack is fed with live steam and that the vapour that it produces is used "in situ".

11. A process according to any one of claims 1 to 8 and 10, **characterised in that** the vapour produced in the simultaneous heating and evaporation phase is in addition consumed in at least one of the heating stages H₀ and/or H₁ to Hₙ of phase d) and/or phase c) when phase c) is equipped with the same stage flash evaporation means as phase a) and multiple stage heating as heating phase d).

12. A process according to claims 9 and 10, **characterised in that** the vapour produced in the simultaneous heating and evaporation phase is in addition consumed in one of the multiple effects of phase c).

13. A process according to any one of claims 1 to 12, **characterised in that** the vapour produced in the simultaneous heating and evaporation phase is in addition consumed in at least one tubular heater inserted for this purpose between at least two of the heaters of rank K and K-1 (K having a value of 1 to n) in phases d) and/or c).

14. A process according to any one of claims 1 to 13, **characterised in that** the vapour produced in the simultaneous heating and evaporation phase is in addition consumed to heat the decomposed liquor used in the preparation of bauxite slurry and/or to produce high temperature hot water (80 to 90°C).

15. A process according to any one of claims 1 to 14, **characterised in that** the simultaneous heating and evaporation phase of the aqueous medium intended for attack is carried out using at least one stage of simultaneous heating and evaporation, each stage being composed of one or several simultaneous heating and evaporation means operating in series or in parallel.

16. A process according to claim 15, **characterised in that** the simultaneous heating and evaporation of the aqueous medium intended for attack is carried out in at least two stages and that the vapour generated by one of the simultaneous heating and evaporation stages is used to feed the simultaneous heating and evaporation stage directly preceding it.

17. A process according to claim 15 or 16, **characterised in that** live steam is fed to the first simultaneous heating and evaporation stage of the aqueous medium intended for attack.

18. A process according to one of the claims 15 to 17, **characterised in that** one of the simultaneous heating and evaporation stages of the aqueous medium intended for attack is located at the outlet of phases (d) and/or (c) of heating by live steam and that another of said simultaneous heating and evaporation stages of the aqueous medium intended for attack is placed between the outlet of the first of the heating stages (H₁) of phases d) and/or c) and the inlet of the live steam heating phase (stage H₀).

19. A process according to one of the claims 15 to 17, **characterised in that** one of the simultaneous heating and evaporation stages of the aqueous medium intended for attack is located at the outlet of phases (d) and/or (c) of heating by live steam (stage H₀) and that two other of said simultaneous heating and evaporation stages of the aqueous medium intended for attack are placed between the outlet of the first of the heating stages (H₁) of phases (d) and/or (c) and the inlet of the live steam heating phase (stage H₀).

20. A process according to any one of claims 1 to 19, **characterised in that**, in the simultaneous heating and evaporation phase(s), a vertical falling film of aqueous medium intended for attack is used, heated by vapour, and that said film generates vapour in situ which is thereafter separated from the liquid.

21. A process according to any one of claims 1 to 20, **characterised in that** the aqueous medium intended for attack is heated by direct mixing of said medium with vapour.

22. A process according to claim 21, **characterised in that** the aqueous medium intended for attack is heated in at least one stage by vapour injection, and that said stage is located at the inlet of the simultaneous heating and evaporation stage.

23. A process according to claim 21, **characterised in that**, in each of the direct mixing heating stages, vapour generated by each of the simultaneous heating and evaporation stages of the aqueous medium intended for attack is used.

24. A process according to any one of claims 1 to 23, **characterised in that** the vapour produced in at least one of the simultaneous heating and evaporation stages is compressed to bring it to the operating pressure in the relevant stage.

25. A line, according to claims 1 to 24, to bring simultaneously to optimum levels the temperature and concentration an aqueous medium intended for use in bauxite ore attack, in a Bayer process alumina production unit, including :
- a section of interconnected evaporator-flash tanks (FT), installed in series and in which circulates an aqueous medium coming from bauxite attack in an attack reactor (D);
- a section of interconnected heaters (H), installed in series and in which circulates the aqueous medium intended for attack, each flash tank (FT) being appropriately connected to obtain vapour circulation with the heater (H) directly associated with it;
- optionally, a specific evaporation section (P) to eliminate the necessary quantity of water, complementary to that removed in the evaporator-flash tank section (FT);
- at least one heater (H₀) connected to a source of live steam installed at the inlet of a mixing and/or bauxite attack device by means of the attack liquor to bring this liquor, coming from the outlet of the first heater (H₁) in the heaters section (H), to the temperature required for attack;
**characterised in that** a simultaneous heating and evaporation section (FFES) of the aqueous medium intended for attack is inserted in this line.

26. A line according to claim 25, **characterised in that** the simultaneous heating and evaporation section (FFES) is inserted at any point in the heaters section (H) constituting phase (d) of the process.

27. A line according to claim 25, **characterised in that** the simultaneous heating and evaporation section (FFES) is inserted at any point in the stage heaters section (H) of the evaporation section (P).

28. A line according to claim 25, **characterised in that** the simultaneous heating and evaporation section (FFES) is inserted simultaneously at any point of the stage heaters (H) in the heaters section constituting phase (d) of the process and of the stage heaters (H) in the specific evaporation section (P).

29. A line according to any one of claims 25 to 28, **characterised in that** the simultaneous heating and evaporation section (FFES) is inserted between heater H₀ fed with live steam, in the stage heaters section (H) of phase (d) of the process, and from where it receives the aqueous medium to be treated, and the attack zone which it feeds with attack aqueous medium brought at the optimum temperature and/or concentration.

30. A line according to any one of claims 25 to 28, **characterised in that** the simultaneous heating and evaporation section (FFES) is inserted between heater (H₀) fed with live steam, in the specific evaporation section (P), and from where it receives the aqueous medium to be treated, and heater (Hₙ) fed with flash vapour from the heating phase (d) of the process, which it feeds with the treated aqueous medium.

31. A line according to any one of claims 25 to 28, **characterised in that** the simultaneous heating and evaporation section (FFES) is inserted between heater (H₁) fed with flash vapour, and from where it receives the aqueous medium to be treated, and heater (H₀) fed with live steam of the heaters section (H) constituting phase (d) of the process and/or of the heaters section (H) of the specific evaporation section (P), which it feeds with the treated aqueous medium.

32. A line according to any one of claims 25 to 28, **characterised in that** the simultaneous heating and evaporation section (FFES) is inserted :
- according to a first level, between heater (H₁) fed with flash vapour and from where it receives the aqueous medium to be treated, and heater (H₀) fed with live steam, which it feeds back with the treated aqueous medium;
- according to a second level, between heater (H₀) fed with live steam and from where it receives the aqueous medium brought at a higher temperature and:
• either the bauxite attack zone which it feeds with the aqueous medium heated and/or concentrated to an optimum level for attack;
• or, in the case of the specific evaporation section (P), the rank "n" heater of phase (d) of the process which it feeds back with the treated aqueous medium.

33. A line according to any one of claims 25 to 28, **characterised in that** the simultaneous heating and evaporation section (FEES) is fed with live steam and produces vapour which is used in situ.

34. A line according to any one of claims 25 to 33, **characterised in that** the simultaneous heating and evaporation section (FFES) is connected for the use of the produced vapour:
- to heater (H₀), combining its live steam feed with all or part of the vapour produced;
- and/or to at least one of the stage heaters (H) in the heating section of phase (d) of the process and/or the specific evaporation section (P) of phase (c) of the process ;
- and/or to a tubular heater specially installed between two heaters in the heating sections of phase (d) and/or in the specific evaporation section (P) of phase (c);
- and/or to one of the effects of the multiple effect of the specific evaporation section (P) of phase (c) ;
- and/or to appropriate means to produce hot water and/or to heat the decomposed liquor used in the preparation of bauxite slurry.

35. A line according to any one of claims 25 to 34, **characterised in that** the simultaneous heating and evaporation section (FEES) includes at least one simultaneous heating and evaporation stage of the aqueous medium intended for attack, each stage being composed of one or several simultaneous heating and evaporation means operating in series or in parallel.

36. A line according to any one of claims 25 to 35, **characterised in that** the simultaneous heating and evaporation section (FFES) includes at least one single stage (39) fed with live steam and connected, for the treatment of the produced vapour, to heater (H₀) combining its live steam feed with all or part of the vapour and/or to its own exchanger (54).

37. A line according to any one of claims 25 to 36, **characterised in that** the simultaneous heating and evaporation section (FFES) includes two simultaneous heating and evaporation stages (39 and 49) in which the first stage (39) is connected, for the treatment of the produced vapour, to the second stage (49) and to heater (H₀).

38. A line according to claim 37, **characterised in that** one of the stages in the simultaneous heating and evaporation section (49) is connected upstream to the outlet of heater (H₁) in the series of heaters (H) and downstream to the inlet of heater (H₀), and **in that** the other stage of the simultaneous heating and evaporation section (39) is connected upstream to the outlet of heater (H₀) and downstream to the attack zone when the simultaneous heating and evaporation section is installed in phase d) of the process or to heater (Hₙ) of phase d) when the simultaneous heating and evaporation section is installed in phase c) of the process.

39. A line according to any one of claims 25 to 38, **characterised in that** the simultaneous heating and evaporation section (FFES) includes three stages, in which one of the stages (39) is connected to the outlet of heater (H₀) (fed with live steam) of phases d) and/or c) of the process, the other stages (49 89) in series being connected upstream to the outlet of heater (H₁) fed with flash vapour, and downstream to the inlet of heater (H₀) of phases d) and/or c) of the process.

40. A line according to any one of claims 25 to 39, **characterised in that** one stage of simultaneous heating and evaporation (39, 49, 89) includes in particular a falling film simultaneous heater-evaporator (54, 44, 78) which in turn includes in particular a vertical tube exchanger (56, 46, 80), a distribution system (62, 51, 79) and a liquid-vapour separator (53, 47, 73).

41. A line according to any one of claims 25 to 40, **characterised in that** one stage of simultaneous heating and evaporation (39, 49, 89) also includes a heater (52, 41, 72) with direct mixing of the aqueous medium intended for attack with vapour.

42. A line according to any one of claims 25 to 41, **characterised in that** the mixing heater (52, 41, 72) is connected downstream, to ensure the circulation of the aqueous medium intended for attack, to the inlet of the simultaneous heater-evaporator (54, 44, 78) and is fed with vapour from said simultaneous heater-evaporator (54, 44, 78).

43. A line according to any one of claims 25 to 42, **characterised in that** at least one stage of the simultaneous heating and evaporation section is equipped with a compression station (65) to compress the produced vapour and to bring it to the operating pressure of the relevant stage.

44. A Bayer process alumina production unit, **characterised in that** it includes a processing line designed to bring simultaneously to an optimum level of temperature and concentration the aqueous medium intended for attack of bauxite ore according to anyone of claims 25 to 43.

## Patentansprüche

1. Verfahren zum gleichzeitigen Einstellen eines für den Aufschluß eines Bauxiterzes in einer Anlage zur Herstellung von Aluminiumoxid nach dem Bayer-Verfahren bestimmten wäßrigen Mediums auf eine optimale Temperatur und eine optimale Konzentration mit den aufeinanderfolgenden Phasen (a) bis (f), bei denen man:
a) das aus dem Aufschluß kommende, mutterlaugenhaltige wäßrige Medium in einer Zone zur Verdampfung mit stufenweiser Entspannung abkühlt und eindampft;
b) die Rückstände abtrennt, das Aluminiumtrihydroxid ausfällt und das für den Aufschluß bestimmte wäßrige Medium zurückgewinnt, welches aus der entladenen Lauge besteht;
c) gegebenenfalls in einem Abschnitt zum spezifischen Verdampfen die erforderliche und die bereits in Phase (a) verdampfte Wassermenge ergänzende Wassermenge abdampft;
d) das für den Aufschluß bestimmte wäßrige Medium in mehreren Stufen erwärmt;
e) in jeder der Stufen der Erwärmungsphase (d) den in jeder der Stufen der Eindampfungsphase (a) erzeugten Entspannungsdampf verwendet;
f) das aus der Erwärmungsphase (d) kommende, für den Aufschluß bestimmte wäßrige Medium mit Frischdampf erwärmt;
**dadurch gekennzeichnet, daß** man zusätzlich zu allen diesen Phasen eine Phase durchführt, bei der man das für den Aufschluß bestimmte wäßrige Medium gleichzeitig erwärmt und eindampft.

2. Verfahren nach Anspruch 1, **dadurch gekennzeichnet, daß** die Phase des gleichzeitigen Erwärmens und Eindampfens des für den Aufschluß bestimmten wäßrigen Mediums an einem beliebigen Punkt der Phase (d) des stufenweisen Erwärmens integriert ist.

3. Verfahren nach Anspruch 1, **dadurch gekennzeichnet, daß** die Phase des gleichzeitigen Erwärmens und Eindampfens des für den Aufschluß bestimmten wäßrigen Mediums an einem beliebigen Punkt der Phase (c) des spezifischen Verdampfens integriert ist, wenn die Phase (c) mit den gleichen Einrichtungen zur Verdampfung mit stufenweiser Entspannung wie die Eindampfungsphase (a) und zum mehrstufigen Erwärmen wie die Erwärmungsphase (d) ausgestattet ist.

4. Verfahren nach Anspruch 1, **dadurch gekennzeichnet, daß** die Phase des gleichzeitigen Erwärmens und Eindampfens des für den Aufschluß bestimmten wäßrigen Mediums gleichzeitig an einem beliebigen Punkt der Phasen (d) und (c) des stufenweisen Erwärmens (H₀, H₁ bis Hₙ) und des spezifischen Verdampfens integriert ist, wobei die Phase (c) mit den gleichen Einrichtungen zur Verdampfung mit stufenweiser Entspannung (FT₁ bis FTₙ) und zum mehrstufigen Erwärmen (H₀, H₁ bis Hₙ) wie die Phasen (a) und (d) ausgestattet ist.

5. Verfahren nach einem der Ansprüche 1 bis 4, **dadurch gekennzeichnet, daß** die Phase des gleichzeitigen Erwärmens und Eindampfens des für den Aufschluß bestimmten wäßrigen Mediums das zu erwärmende und/oder einzudampfende wäßrige Medium aus der mit Frischdampf gespeisten Erwärmungsstufe (H₀) der Phase (d) empfängt und die auf optimale Temperatur und/oder optimale Konzentration eingestellte Aufschlußlauge der Aufschlußzone zuführt.

6. Verfahren nach einem der Ansprüche 1 bis 4, **dadurch gekennzeichnet, daß** die Phase des gleichzeitigen Erwärmens und Eindampfens des für den Aufschluß bestimmten wäßrigen Mediums das zu erwärmende und/oder einzudampfende wäßrige Medium aus der mit Frischdampf gespeisten Erwärmungsstufe (H₀) der Phase (c) empfängt und die erwärmte und/oder aufkonzentrierte Lauge dem Erwärmer des Rangs "n" der Erwärmungsphase (d) zuführt.

7. Verfahren nach einem der Ansprüche 1 bis 4, **dadurch gekennzeichnet, daß** die Phase des gleichzeitigen Erwärmens und Eindampfens des für den Aufschluß bestimmten wäßrigen Mediums das zu erwärmende und einzudampfende wäßrige Medium aus der ersten mit Entspannungsdampf gespeisten Erwärmungsstufe (H₁) der Phasen (d) und/oder (c) empfängt und das genannte wäßrige Medium der mit Frischdampf gespeisten Erwärmungsstufe (H₀) der Phasen (d) und/oder (c) zuführt, wo es erwärmt und/oder aufkonzentriert wird.

8. Verfahren nach einem der Ansprüche 1 bis 4, **dadurch gekennzeichnet, daß** die Phase des gleichzeitigen Erwärmens und Eindampfens des für den Aufschluß bestimmten wäßrigen Mediums:
- das zu erwärmende und/oder einzudampfende wäßrige Medium aus der ersten mit Entspannungsdampf gespeisten Erwärmungsstufe (H₁) der Phasen (d) und/oder (c) empfängt;
- das wäßrige Medium der mit Frischdampf gespeisten Erwärmungsstufe (H₀) der Phasen (d) und/oder (c) zuführt, wo es auf eine höhere Temperatur gebracht wird;
- das genannte wäßrige Medium aus der mit Frischdampf gespeisten Erwärmungsstufe (H₀) empfängt;
- und die erwärmte und/oder aufkonzentrierte Lauge im Fall der Phase (d) der Aufschlußzone und im Fall der Phase (c) dem Erwärmer des Rangs "n" der Phase (d) zuführt.

9. Verfahren nach einem der Ansprüche 1 bis 4, **dadurch gekennzeichnet, daß** die Phase des gleichzeitigen Erwärmens und Eindampfens in die Phase (d) integriert ist, wenn der Abschnitt zum spezifischen Verdampfen (P) der Phase (c) mehrstufig ausgeführt ist.

10. Verfahren nach einem der Ansprüche 1 bis 9, **dadurch gekennzeichnet, daß** man die Phase des gleichzeitigen Erwärmens und Eindampfens des für den Aufschluß bestimmten wäßrigen Mediums mit Frischdampf speist und den anfallenden Dampf (Brüden) "in situ" verbraucht.

11. Verfahren nach einem der Ansprüche 1 bis 8 und 10, **dadurch gekennzeichnet, daß** man den in der Phase des gleichzeitigen Erwärmens und Eindampfens anfällenden Dampf außerdem in mindestens einer der Erwärmungsstufen H₀ und/oder H₁ bis Hₙ der Phasen (d) und/oder (c) verbraucht, wenn die Phase (c) mit den gleichen Einrichtungen zur Verdampfung mit stufenweiser Entspannung wie die Phase (a) und zum mehrstufigen Erwärmen wie die Erwärmungsphase (d) ausgestattet ist.

12. Verfahren nach den Ansprüchen 9 und 10, **dadurch gekennzeichnet, daß** man den in der Phase des gleichzeitigen Erwärmens und Eindampfens anfallenden Dampf (Brüden) außerdem in einer der mehreren Stufen der Phase (c) verbraucht.

13. Verfahren nach einem der Ansprüche 1 bis 12, **dadurch gekennzeichnet, daß** man den in der Phase des gleichzeitigen Erwärmens und Eindampfens anfallenden Dampf (Brüden) außerdem in mindestens einem zwischen mindestens zwei der Erwärmer des Rangs K und K-1 (wobei K Werte von 1 bis n annimmt) der Phasen (d) und/oder (c) zu diesem Zweck integrierten Rohrerwärmer verbraucht.

14. Verfahren nach einem der Ansprüche 1 bis 13, **dadurch gekennzeichnet, daß** man den in der Phase des gleichzeitigen Erwärmens und Eindampfens anfallenden Dampf (Brüden) außerdem zum Erwärmen der zur Herstellung der Bauxitbrühe dienenden entladenen Lauge und/oder zur Erzeugung von heißem Wasser mit erhöhter Temperatur (80°C bis 90°C) verbraucht.

15. Verfahren nach einem der Ansprüche 1 bis 14, **dadurch gekennzeichnet, daß** man die Phase des gleichzeitigen Erwärmens und Eindampfens unter Anwendung mindestens einer Stufe des gleichzeitigen Erwärmens und Eindampfens des für den Aufschluß bestimmten wäßrigen Mediums durchführt, wobei jede Stufe sich aus einer oder mehreren, hintereinander oder parallel angeordneten Einrichtungen zum gleichzeitigen Erwärmen und Eindampfen zusammensetzt.

16. Verfahren nach Anspruch 15, **dadurch gekennzeichnet, daß** man mindestens zwei Stufen des gleichzeitigen Erwärmens und Eindampfens des für den Aufschluß bestimmten wäßrigen Mediums durchführt und den durch eine der Stufen des gleichzeitigen Erwärmens und Eindampfens erzeugten Dampf (Brüden) zur Speisung der direkt vorhergehenden Stufe des gleichzeitigen Erwärmens und Eindampfens verwendet.

17. Verfahren nach Anspruch 15 oder 16, **dadurch gekennzeichnet, daß** man die erste Stufe des gleichzeitigen Erwärmens und Eindampfens des für den Aufschluß bestimmten wäßrigen Mediums mit Frischdampf speist.

18. Verfahren nach einem der Ansprüche 15 bis 17, **dadurch gekennzeichnet, daß** man eine der Stufen des gleichzeitigen Erwärmens und Eindampfens des für den Aufschluß bestimmten wäßrigen Mediums am Ausgang der Phasen (d) und/oder (c) des Erwärmens durch den Frischdampf anordnet und eine andere der genannten Stufen des gleichzeitigen Erwärmens und Eindampfens des für den Aufschluß bestimmten wäßrigen Mediums zwischen dem Ausgang der ersten der Erwärmungsstufen (H₁) der Phasen (d) und/oder (c) und dem Eingang der Phase des Erwärmens durch den Frischdampf (Stufe H₀) anordnet.

19. Verfahren nach einem der Ansprüche 15 bis 17, **dadurch gekennzeichnet, daß** man eine der Stufen des gleichzeitigen Erwärmens und Eindampfens des für den Aufschluß bestimmten wäßrigen Mediums am Ausgang der Phasen (d) und/oder (c) des Erwärmens durch den Frischdampf (Stufe H₀) anordnet und zwei andere der Stufen des gleichzeitigen Erwärmens und Eindampfens des für den Aufschluß bestimmten wäßrigen Mediums zwischen dem Ausgang der ersten der Erwärmungsstufen (H₁) der Phasen (d) und/oder (c) und dem Eingang der Phase des Erwärmens durch den Frischdampf (Stufe H₀) anordnet.

20. Verfahren nach einem der Ansprüche 1 bis 19, **dadurch gekennzeichnet, daß** man in der oder den Stufen des gleichzeitigen Erwärmens und Eindampfens einen vertikalen Fallfilm des für den Aufschluß bestimmten wäßrigen Mediums, der durch den Dampf erwärmt wird, verwendet und der Film "in situ" Dampf erzeugt, der dann von der Flüssigkeit abgetrennt wird.

21. Verfahren nach einem der Ansprüche 1 bis 20, **dadurch gekennzeichnet, daß** man das für den Aufschluß bestimmte wäßrige Medium durch direktes Vermischen mit dem Dampf erwärmt.

22. Verfahren nach Anspruch 21, **dadurch gekennzeichnet, daß** man das für den Aufschluß bestimmte wäßrige Medium in mindestens einer Stufe des Erwärmens durch Dampfeinleitung erwärmt und die genannte Stufe am Eingang der Phase des gleichzeitigen Erwärmens und Eindampfens anordnet.

23. Verfahren nach Anspruch 21, **dadurch gekennzeichnet, daß** man in jeder der Stufen des Erwärmens durch Vermischen den durch jede der Stufen des gleichzeitigen Erwärmens und Eindampfens des für den Aufschluß bestimmten wäßrigen Mediums erzeugten Dampf verwendet.

24. Verfahren nach einem der Ansprüche 1 bis 23, **dadurch gekennzeichnet, daß** man den in mindestens einer der Stufen der Phase des gleichzeitigen Erwärmens und Eindampfens anfallenden Dampf (Brüden) auf den Arbeitsdruck der betreffenden Stufe verdichtet.

25. Kette zum gleichzeitigen Einstellen eines für den Aufschluß eines Bauxiterzes in einer Anlage zur Herstellung von Aluminiumoxid nach dem Bayer-Verfahren bestimmten wäßrigen Mediums auf optimale Temperatur und optimale Konzentration nach den Ansprüchen 1 bis 24, enthaltend:
- einen Abschnitt mit hintereinander angeordneten, miteinander verbundenen Verdampfer-Entspannern (FT), die von einem aus dem Aufschluß eines Bauxits in einem Aufschlußreaktor (D) stammenden wäßrigen Medium durchströmt werden;
- einen Abschnitt mit hintereinander angeordneten, miteinander verbundenen Erwärmern (H), die von dem für den Aufschluß bestimmten wäßrigen Medium durchströmt werden, wobei jeder Entspanner (FT) jeweils mit jedem Erwärmer (H), der mit diesem direkt korrespondiert, zwecks Dampfzirkulation verbunden ist;
- gegebenenfalls einen Abschnitt zum spezifischen Verdampfen (P) zum Abdampfen der erforderlichen und die bereits im Verdampfer-Entspanner-Abschnitt (FT) abdampfte Wassermenge ergänzenden Wassermenge;
- mindestens einen an eine Frischdampfquelle angeschlossenen Erwärmer (H₀), der mit dem Eingang einer Vorrichtung zum Mischen und/oder Aufschluß des Bauxits mit der Aufschlußlauge verbunden ist und dazu dient, diese aus dem Ausgang des dem Erwärmerabschnitt (H) zugehörigen ersten Erwärmers (H₁) auf die für den Aufschluß erforderliche Temperatur zu bringen;
**dadurch gekennzeichnet, daß** man in diese Kette einen Abschnitt zum gleichzeitigen Erwärmen und Eindampfen (FFES) des für den Aufschluß bestimmten wäßrigen Mediums integriert.

26. Kette nach Anspruch 25, **dadurch gekennzeichnet, daß** der Abschnitt zum gleichzeitigen Erwärmen und Eindampfen (FFES) an einem beliebigen Punkt des die Phase (d) des Verfahrens bildenden Erwärmerabschnitts (H) integriert ist.

27. Kette nach Anspruch 25, **dadurch gekennzeichnet, daß** der Abschnitt zum gleichzeitigen Erwärmen und Eindampfen (FFES) an einem beliebigen Punkt des Abschnitts mit stufenweise angeordneten Erwärmern (H) des Verdampfungsabschnitts (P) integriert ist.

28. Kette nach Anspruch 25, **dadurch gekennzeichnet, daß** der Abschnitt zum gleichzeitigen Erwärmen und Eindampfen (FFES) gleichzeitig an einem beliebigen Punkt der stufenweise angeordneten Erwärmer (H) des die Phase (d) des Verfahrens bildenden Erwärmerabschnitts (H) und der stufenweise angeordneten Erwärmer (H) des spezifischen Verdampfungsabschnitts (P) integriert ist.

29. Kette nach einem der Ansprüche 25 bis 28, **dadurch gekennzeichnet, daß** der Abschnitt zum gleichzeitigen Erwärmen und Eindampfen (FFES) zwischen dem mit Frischdampf gespeisten Erwärmer H₀ des Abschnitts mit stufenweise angeordneten Erwärmern (H) der Phase (d) des Verfahrens, aus welchem er das zu behandelnde wäßrige Medium empfängt, und der Aufschlußzone, der er das auf die optimale Temperatur und/oder die optimale Konzentration eingestellte wäßrige Aufschlußmedium zuführt, integriert ist.

30. Kette nach einem der Ansprüche 25 bis 28, **dadurch gekennzeichnet, daß** der Abschnitt zum gleichzeitigen Erwärmen und Eindampfen (FFES) zwischen dem mit Frischdampf gespeisten Erwärmer (H₀) des Abschnitts zum spezifischen Verdampfen (P), aus welchem er das zu behandelnde wäßrige Medium empfängt, und dem mit Entspannungsdampf gespeisten Erwärmer (Hₙ) der Erwärmungsphase (d) des Verfahrens, dem er das behandelte wäßrige Medium zuführt, integriert ist.

31. Kette nach einem der Ansprüche 25 bis 28, **dadurch gekennzeichnet, daß** der Abschnitt zum gleichzeitigen Erwärmen und Eindampfen (FFES) zwischen dem mit Entspannungsdampf gespeisten Erwärmer (H₁), aus welchem er das zu behandelnde wäßrige Medium empfängt, und dem mit Frischdampf gespeisten Erwärmer (H₀) des die Phase (d) des Verfahrens bildenden Erwärmerabschnitts (H) und/oder dem Erwärmerabschnitt (H) des Abschnitts zum spezifischen Verdampfen (P), dem er das behandelte wäßrige Medium zuführt, integriert ist.

32. Kette nach einem der Ansprüche 25 bis 28, **dadurch gekennzeichnet, daß** der Abschnitt zum gleichzeitigen Erwärmen und Eindampfen (FFES) integriert ist:
- nach einer ersten Stufe zwischen dem mit Entspannungsdampf gespeisten Erwärmer (H₁), aus welchem er das zu behandelnde wäßrige Medium empfängt, und dem mit Frischdampf gespeisten Erwärmer (H₀), dem er das behandelte wäßrige Medium zuführt;
- nach einer zweiten Stufe zwischen dem mit Frischdampf gespeisten Erwärmer (H₀), aus welchem er das auf eine höhere Temperatur gebrachte wäßrige Medium empfängt, und:
* entweder der Bauxitaufschlußzone, der er das für den Aufschluß optimal erwärmte und/oder aufkonzentrierte wäßrige Medium zuführt;
* oder im Fall des Abschnitts zum spezifischen Verdampfen (P) dem Erwärmer des Rangs "n" der Phase (d) des Verfahrens, dem er das behandelte wäßrige Medium zurückführt.

33. Kette nach einem der Ansprüche 25 bis 28, **dadurch gekennzeichnet, daß** der Abschnitt zum gleichzeitigen Erwärmen und Eindampfen (FFES) mit Frischdampf gespeist wird und "in situ" verbrauchten Dampf (Brüden) erzeugt.

34. Kette nach einem der Ansprüche 25 bis 33, **dadurch gekennzeichnet, daß** der Abschnitt zum gleichzeitigen Erwärmen und Eindampfen (FFES) zwecks Verwendung des anfallenden Dampfs (Brüden) mit:
- dem Erwärmer (H₀) unter Kombination seiner Frischdampfspeisung mit zumindest einem Teil des anfallenden Dampfs (Brüden);
- und/oder mindestens einem der stufenweise angeordneten Erwärmer (H) des Erwärmungsabschnitts der Phase (d) des Verfahrens und/oder des Abschnitts zum spezifischen Verdampfen (P) der Phase (c) des Verfahrens;
- und/oder einem zwischen zwei Erwärmern der Erwärmungsabschnitte der Phase (d) und/oder des Abschnitts zum spezifischen Verdampfen (P) der Phase (c) speziell integrierten Rohrerwärmer;
- und/oder einer der Stufen der mehrstufigen Ausführung des Abschnitts zum spezifischen Verdampfen (P) der Phase (c);
- und/oder mit Einrichtungen zur Erzeugung von heißem Wasser und/oder zum Erwärmen der zur Herstellung der Bauxitbrühe dienenden entladenen Lauge;
verbunden ist.

35. Kette nach einem der Ansprüche 25 bis 34, **dadurch gekennzeichnet, daß** der Abschnitt zum gleichzeitigen Erwärmen und Eindampfen (FFES) mindestens eine Stufe des gleichzeitigen Erwärmens und Eindampfens des für den Aufschluß bestimmten wäßrigen Mediums aufweist, wobei jede Stufe sich aus einer oder mehreren, hintereinander oder parallel angeordneten Einrichtungen zum gleichzeitigen Erwärmen und Eindampfen zusammensetzt.

36. Kette nach einem der Ansprüche 25 bis 35, **dadurch gekennzeichnet, daß** der Abschnitt zum gleichzeitigen Erwärmen und Eindampfen (FFES) eine einzige Stufe (39) aufweist, die mit Frischdampf gespeist wird und zur Behandlung des anfallenden Dampfs (Brüden) mit dem Erwärmer (H₀) unter Kombination seiner Frischdampfspeisung mit zumindest einem Teil der Brüden und/oder dem zugehörigen Austauscher (54) verbunden ist.

37. Kette nach einem der Ansprüche 25 bis 36, **dadurch gekennzeichnet, daß** der Abschnitt zum gleichzeitigen Erwärmen und Eindampfen (FFES) zwei Stufen des gleichzeitigen Erwärmens und Eindampfens (39 und 49) aufweist, wobei die erste Stufe (39) zur Behandlung des anfallenden Dampfs (Brüden) mit der zweiten Stufe (49) und mit dem Erwärmer (H₀) verbunden ist.

38. Kette nach Anspruch 37, **dadurch gekennzeichnet, daß** eine der Stufen des Abschnitts zum gleichzeitigen Erwärmen und Eindampfen (49) stromaufwärts mit dem Ausgang des Erwärmers (H₁) der Reihe von Erwärmern (H) und stromabwärts mit dem Eingang des Erwärmers (H₀) verbunden ist und die andere Stufe des Abschnitts zum gleichzeitigen Erwärmen und Eindampfen (39) stromaufwärts mit dem Ausgang des Erwärmers (H₀) und stromabwärts mit der Aufschlußzone verbunden ist, wenn der Abschnitt zum gleichzeitigen Erwärmen und Eindampfen in der Phase (d) des Verfahrens vorgesehen ist, oder mit dem Erwärmer (Hₙ) der Phase (d) verbunden ist, wenn der Abschnitt zum gleichzeitigen Erwärmen und Eindampfen in der Phase (c) des Verfahrens vorgesehen ist.

39. Kette nach einem der Ansprüche 25 bis 38, **dadurch gekennzeichnet, daß** der Abschnitt zum gleichzeitigen Erwärmen und Eindampfen (FFES) drei Stufen aufweist, wobei eine der Stufen (39) mit dem Ausgang des (mit Frischdampf gespeisten) Erwärmers (H₀) der Phasen (d) und/oder (c) des Verfahrens verbunden ist und die anderen Stufen (49, 89) hintereinander stromaufwärts mit dem Ausgang des mit Entspannungsdampf gespeisten Erwärmers (H₁) und stromabwärts mit dem Eingang des Erwärmers (H₀) der Phasen (d) und/oder (c) des Verfahrens verbunden sind.

40. Kette nach einem der Ansprüche 25 bis 39, **dadurch gekennzeichnet, daß** eine Stufe des gleichzeitigen Erwärmens und Eindampfens (39, 49, 89) insbesondere eine Fallfilmvorrichtung zum gleichzeitigen Erwärmen und Eindampfen (54, 44, 78) aufweist, welche insbesondere einen Austauscher mit vertikal angeordneten Rohren (56, 46, 80), ein Verteilersystem (62, 51, 79) und einen Flüssigkeit/Dampf-Separator (53, 47, 73) aufweist.

41. Kette nach einem der Ansprüche 25 bis 40, **dadurch gekennzeichnet, daß** eine Stufe des gleichzeitigen Erwärmens und Eindampfens (39, 49, 89) auch noch einen Erwärmer (52, 41, 72) aufweist, in dem das für den Aufschluß bestimmte wäßrige Medium direkt mit dem Dampf vermischt wird.

42. Kette nach einem der Ansprüche 25 bis 41, **dadurch gekennzeichnet, daß** der Vermischungserwärmer (52, 41, 72) stromabwärts zur Zirkulation des für den Aufschluß bestimmten wäßrigen Mediums mit dem Eingang der Vorrichtung zum gleichzeitigen Erwärmen und Verdampfen (54, 44, 78) verbunden ist und durch die Vorrichtung zum gleichzeitigen Erwärmen und Verdampfen (54, 44, 78) mit Dampf gespeist wird.

43. Kette nach einem der Ansprüche 25 bis 42, **dadurch gekennzeichnet, daß** mindestens eine Stufe des Abschnitts zum gleichzeitigen Erwärmen und Eindampfen mit einer Verdichterstation (65) zum Verdichten des anfallenden Dampfs (Brüden) auf den Arbeitsdruck der betreffenden Stufe versehen ist.

44. Anlage zur Herstellung von Aluminiumoxid nach dem Bayer-Verfahren, **dadurch gekennzeichnet, daß** sie eine Kette zum gleichzeitigen Einstellen des für den Aufschluß eines Bauxiterzes bestimmten wäßrigen Mediums auf optimale Temperatur und optimale Konzentration nach einem der Ansprüche 25 bis 43 aufweist.
